Europäisches Patentamt

(19) European Patent Office

Office européen des brevets

(11) Numéro de publication: **0 053 525**
**B1**

(12) **FASCICULE DE BREVET EUROPEEN**

(51) Int. Cl.⁴: **G 01 V 1/40**, G 01 V 1/36

(45) Date de publication du fascicule du brevet:
**23.01.85**

(21) Numéro de dépôt: **81401561.6**

(22) Date de dépôt: **09.10.81**

---

(54) **Procédé d'exploration sismique par la technique du profil sismique vertical et installation pour sa mise en oeuvre.**

---

(30) Priorité: **14.11.80 FR 8024276**

(43) Date de publication de la demande:
**09.06.82 Bulletin 82/23**

(45) Mention de la délivrance du brevet:
**23.01.85 Bulletin 85/4**

(84) Etats contractants désignés:
**DE FR GB IT NL**

(56) Documents cités:
**GB - A - 1 569 582**
**US - A - 3 339 176**
**US - A - 3 371 310**

(73) Titulaire: **SOCIETE DE PROSPECTION ELECTRIQUE SCHLUMBERGER, 42, rue Saint-Dominique, F-75340 Paris Cedex 07 (FR)**

(84) Etats contractants désignés: **FR IT**

(73) Titulaire: **Schlumberger Limited, 277 Park Avenue, New York, N.Y. 10172 (US)**

(84) Etats contractants désignés: **DE GB NL**

(72) Inventeur: **Seeman, Bronislaw, 93, Route des Gardes, F-92190 Meudon (FR)**
Inventeur: **Horowicz, Léon, 60, rue des Aulnes, F-92330 Sceaux (FR)**

(74) Mandataire: **Hagel, Francis, Service Brevets ETUDES ET PRODUCTIONS SCHLUMBERGER B.P. 202, F-92142 Clamart Cedex (FR)**

---

BUNDESDRUCKEREI BERLIN

# 0 053 525

## Beschreibung

L'invention concerne un procédé pour l'étude des formations souterraines par la technique dite du profil sismique vertical, dans lequel un détecteur d'ondes acoustiques est placé dans un puits successivement à différentes profondeurs, des ondes acoustiques sont émises au moyen d'une source en surface et les signaux produits par le détecteur sont enregistrés.

Un objectif essentiel de ces mesures est de déceler les horizons réflexifs ou miroirs situés plus bas que le fond du puits, grâce à l'analyse des ondes acoustiques réfléchies par ces miroirs et remontant vers le détecteur appelées ci-après ondes remontantes.

Toutefois, les ondes détectées comprennent, en plus des ondes remontantes, les ondes qui se sont propagées directement de la source au détecteur, des ondes ayant subi des réflexions multiples et des ondes parasites de diverse nature.

En regroupant tous les enregistrements en un document unique, on peut repérer des cohérences entre les différents tracés mais étant donné la multiplicité des composantes qui se superposent dans chaque signal, l'interprétation de ce document est extrêmement délicate.

Un filtrage des signaux recueillis apparaît donc nécessaire pour améliorer le rapport signal/bruit et mieux mettre en évidence les ondes remontantes.

Il est bien connu, afin d'accentuer les composantes totales d'ondes remontantes, de décaler les signaux de façon à aligner les ondes remontantes, et d'additionner les signaux ainsi décalés. De même, afin d'accentuer les ondes descendantes, il suffit de décaler les signaux de façon à aligner les dondes descendantes et d'additionner les signaux ainsi décalés.

Cette technique est utilisée dans le brevet GB-1 569 582 qui décrit le procédé de déconvolution de la composante de l'onde remontante à l'aide de la composante de l'onde descendante. Elle repose sur le fait que, pour deux signaux donnés $s_i(t)$ et $s_k(t)$, le décalage entre les temps d'arrivée des ondes remontantes est de même valeur que le décalage $t_{i,k}$ relatif aux ondes descendantes et de sens contraire, sous réserve que le miroir ne présente pas un pendage trop accusé. Et les décalages $t_{i,k}$, qui représentent le temps de propagation des ondes acoustiques d'un niveau à l'autre, sont très facilement accessibles, par exemple à partir d'une diagraphie acoustique du puits indiquant la vitesse de propagation dans les formations traversées. Cependant, cette technique de sommation ne fournit pas en elle-même une réjection suffisante du bruit.

Par ailleurs, en ce qui concerne les niveaux de détection, la technique classique consiste à les choisir équidistants (voir l'ouvrage »Vertical Seismic Profiling« de E. I. Gal'perin, Society of Exploration Geophysicists, publication spéciale No. 12, pages 11—12).

La demande de brevet français No. 2 432 177 prévoit de traiter deux signaux correspondant à des niveaux consécutifs en les décalant pour aligner les ondes descendantes et en les soustrayant l'un de l'autre. Sous réserve que le décalage $\Delta t$ ait une valeur déterminée, égale au quart de la pseudo-période des ondes acoustiques, on obtient la suppression de la composante d'onde descendante et le renforcement de la composante d'onde remontante.

Mais ceci n'est vrai en fait que pour la fréquence correspondant à la pseudo-période ci-dessus.

De plus, le fait d'assigner une valeur constante à tous les temps $\Delta t$ revient à fixer a priori les niveaux de détection, ce qui en pratique est un sérieux inconvénient, pour la raison suivante.

La qualité des signaux recueillis dépend d'une façon déterminante du couplage acoustique entre le détecteur et la formation.

Le couplage acoustique est lui-même fonction de l'état du puits au niveau considéré.

Ainsi, si la mesure a lieu dans un trou découvert, le couplage détecteur-formation sera bon si le diamètre du puits est régulier et la formation compacte.

Dans un trou tubé, c'est la liaison entre le tubage et la formation — c'est-à-dire la qualité de la cimentation — qui sera déterminante.

Il est donc important, pour obtenir des signaux de détection de qualité optimale, de pouvoir choisir librement les niveaux de détection et donc de pouvoir s'écarter de la règle énoncée dans la demande de brevet précitée.

Dans la même optique, il est souhaitable de pouvoir éliminer les signaux de détection dont la qualité apparaît déficiente. Cette possibilité n'existe pas si le procédé de filtrage utilisé repose sur l'hypothèse que tous les décalages entre signaux de niveaux consécutifs sont égaux.

L'invention vise donc à améliorer le rapport signal/bruit des signaux de détection de façon à accentuer très fortement les composantes d'onde remontante et cela en autorisant un libre choix des niveaux de détection et l'élimination éventuelle des signaux de qualité déficiente.

Un procédé, selon l'invention, d'exploration sismique dans lequel on filtre N signaux de détection comprend les opérations telles que énumérées dans la revendication 1.

Un dispositif, selon l'invention, pour la mise en œuvre du procédé ci-dessus, est décrit dans la revendication 12.

Le mode de filtrage selon l'invention n'impose aucune condition aux temps $t_{i,k}$ et par conséquent les niveaux de détection $x_k$ peuvent être choisis en fonction de l'état du puits de manière à obtenir un couplage acoustique optimal entre le détecteur et la formation.

Pour la même raison, rien n'interdit d'éliminer certains des signaux recueillis, s'il apparaît que leur

2

qualité est insuffisante. Cette possibilité contribue à améliorer le rapport signal/bruit des signaux obtenus.

Pour déterminer les signaux $u_i^*(t)$, l'invention envisage deux solutions différentes.

La première consiste à passer dans le domaine des fréquences. On obtient $u_i^*(t)$ à partir de sa transformée de Fourier $U_i^*$, que l'on détermine par une relation simple à partir des transformées de Fourier $Y_i$ et $Z_i$ respectivement de $y_i(t)$ et $z_i(t)$. Dans la seconde solution, on opère uniquement dans le domaine des temps. On obtient alors une valeur $u_i^*(t)$ approchée directement à partir de $y_i(t)$ et $z_i(t)$. Le caractère approximatif des résultats est compensé par une grande simplicité du traitement.

Une autre caractéristique avantageuse du procédé selon l'invention est qu'il permet de déterminer, tout aussi simplement, des estimations optimales $d_i^*(t)$ des composantes d'onde descendante. La connaissance des valeurs $d_i^*(t)$ est nécessaire pour le traitement de déconvolution qui est appliqué de façon classique à la suite du filtrage. Au sujet de la déconvolution, on se reportera à l'article de P. Kennett et al »Vertical Seismic Profiles: Their Applications in Exploration Geophysics«, Geophysical Prospecting, 1980, 28, pages 684 et suivantes.

L'invention sera bien comprise à la lecture de la description ci-après, faite en se référant aux dessins annexés. Dans les dessins

la figure 1 représente schématiquement une installation d'exploration sismique pour l'obtention d'un profil sismique vertical;

la figure 2 montre de façon très simplifiée le trajet des ondes acoustiques descendantes et remontantes, pour deux positions différentes du détecteur;

la figure 3 représente sous forme de schéma-blocs un dispositif selon l'invention pour le filtrage des signaux de détection;

la figure 4 illustre l'effet de filtrage procuré par le dispositif de la figure 3;

les figures 5 et 6 montrent à titre d'exemple un PSV avant filtrage et après filtrage à l'aide d'un dispositif de la figure 3;

la figure 7 représente une autre forme de réalisation du dispositif de filtrage;

la figure 8 montre schématiquement le milieu de propagation des ondes;

la figure 9 montre un PSV avant filtrage;

la figure 10 montre l'effet du filtrage effectué avec le dispositif de la figure 3 sur le PSV de la figure 9;

la figure 11 illustre l'effet de filtrage obtenu en tenant compte des variations d'impédance acoustique.

la figure 12 représente un dispositif pour la mise en œuvre du procédé de filtrage tenant compte desdites variations.

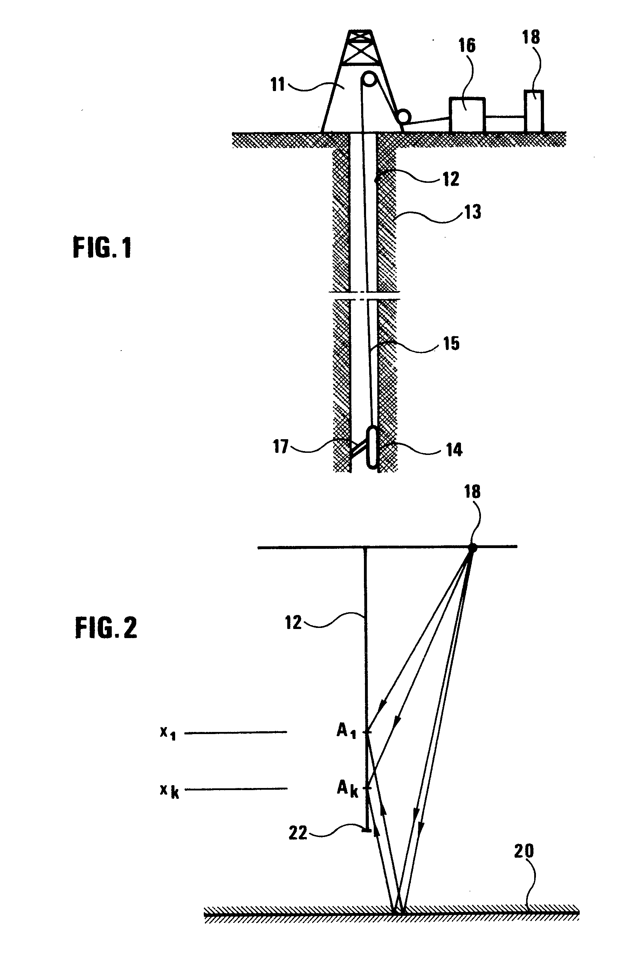

La figure 1 représente une installation d'exploration sismique qui comprend une tour de forage 11 disposée au-dessus d'un puits 12 foré dans des formations terrestres 13.

Un appareil de fond 14 comprenant un capteur d'ondes acoustiques tel qu'un géophone est suspendu dans le puits 12 au moyen d'un câble électrique 15 passant sur des poulies solidaires de la tour de forage. Le câble 15 permet de déplacer l'appareil 14 dans le puits et assure en même temps la transmission des signaux de détection produits par le capteur vers un équipement de surface 16. L'équipement de surface 16 comprend de façon classique un treuil pour enrouler le câble et des moyens pour déterminer la profondeur à laquelle se trouve l'appareil de fond 14, et des moyens pour traiter et enregistrer les signaux de détection transmis par le câble 15.

L'appareil de fond 14 comprend de façon également classique un élément d'ancrage mobile 17 qui peut s'écarter de l'appareil 14 et s'ancrer dans la paroi pour assurer un contact approprié entre le capteur et la paroi du puits. Cela ne se produit que lorsque l'appareil 14 est arrivé à une profondeur où une mesure doit être exécutée, l'équipement de suface 16 émettant alors un message pour commander le déploiement de l'élément d'ancrage.

Une source d'ondes acoustiques 18 est placée à la surface, à une distance déterminée de la tête de puits. Cette source peut être constituée par tout dispositif approprié tel qu'un canon à air. La source 18 est commandée à partir de l'équipement de surface 16 pour effectuer un »tir« lorsque l'appareil de fond 14 est ancré à l'un des niveaux de profondeur prévus.

Plusieurs tirs sont effectués pour chaque niveau, et l'ensemble des signaux ainsi produits sont mis en mémoire et additionnés dans l'équipement de surface 16 de manière que pour chaque niveau, on obtienne un signal dans lequel les composantes significatives soient renforcées au détriment des composantes de bruit aléatoires. On conviendra dans la suite d'appeler ce signal le signal de détection.

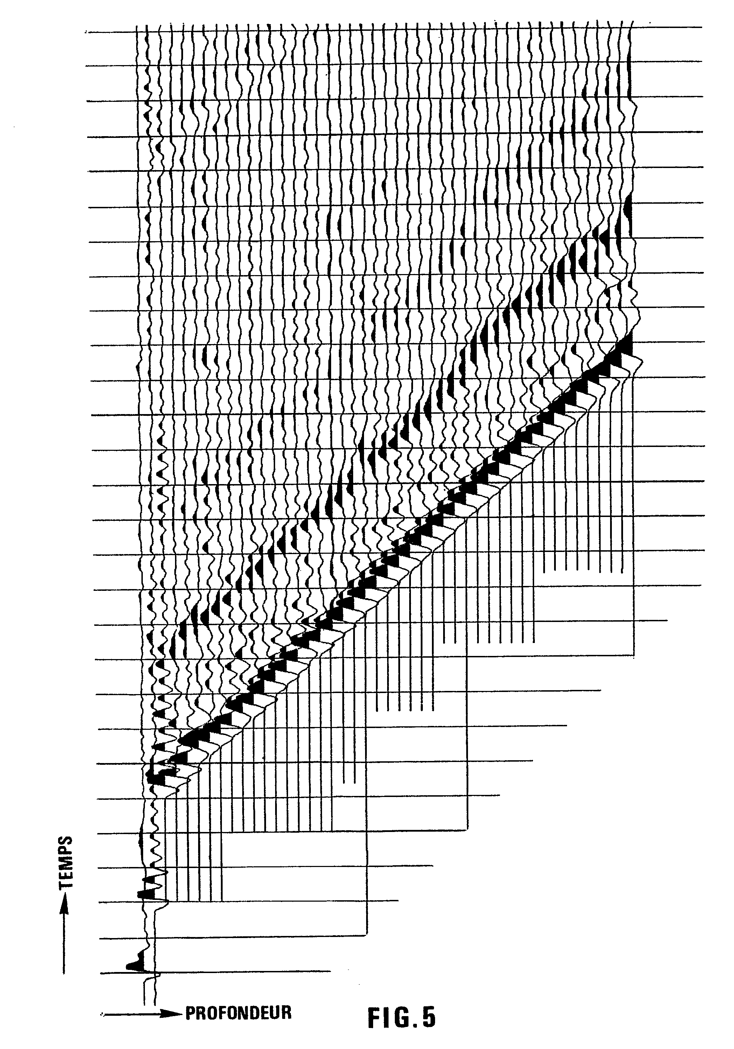

A partir de l'ensemble des signaux de détection obtenus pour les différents niveaux, on produit des enregistrements graphiques ou traces sismiques que l'on regroupe en un document unique appelé profil sismique vertical (PSV) dont la figure 5 montre un exemple.

La figure 2 représente de façon très simplifiée le trajet des ondes acoustiques détectées par le capteur à deux niveaux. La référence 20 désigne un horizon réflexif ou »miroir« plus profond que le fond 22 du puits. Le miroir 20 est constitué par l'interface entre deux couches d'impédances acoustiques nettement différentes.

Le capteur placé en $A_1$ au niveau $x_1$ reçoit une onde acoustique qui se propage directement depuis la source, appelée onde descendante, et une onde réfléchie par le miroir 20, dite onde remontante. C'est cette onde remontante qu'il faut mettre en évidence pour pouvoir déterminer la profondeur du miroir et son coefficient de réflexion.

Le signal de détection $s_1 (t)$ obtenu au niveau $x_1$ est donc la somme d'une composante d'onde descendante $d_1 (t)$ et d'une composante d'onde remontante $u_1 (t)$ et comprend en outre des composantes de bruit dont certaines proviennent de réflexions multiples sur des miroirs situés entre la surface et le fond du puits.

Le capteur placé en $A_k$ au niveau $x_k$ recevra de même une onde descendante et une onde remontante, mais l'onde descendante arrivera plus tard et l'onde remontante plus tôt. Le décalage $t_k$ entre les temps d'arrivée des ondes descendantes vaut

$$t_k = \frac{x_k - x_1}{v_k}$$

$v_k$ étant la vitesse moyenne de propagation des ondes acoustiques dans la tranche délimitée par les niveaux $x_1$ et $x_k$.

Le décalage $t'_k$ entre les temps d'arrivée des ondes remontantes est égal à $- t_k$ si le miroir 20 est sensiblement horizontal. Un terme correctif doit être ajouté si le miroir 20 présente un pendage important. Nous supposerons toutefois dans un premier temps qu'il n'y a pas lieu d'introduire un tel correctif.

Compte tenu de ce qui précède, le signal $s_k (t)$ obtenu au niveau $x_k$ comprend une composante d'onde descendante

$$d_k (t - t_k)$$

et une composante d'onde remontante

$$u_k (t + t_k)$$

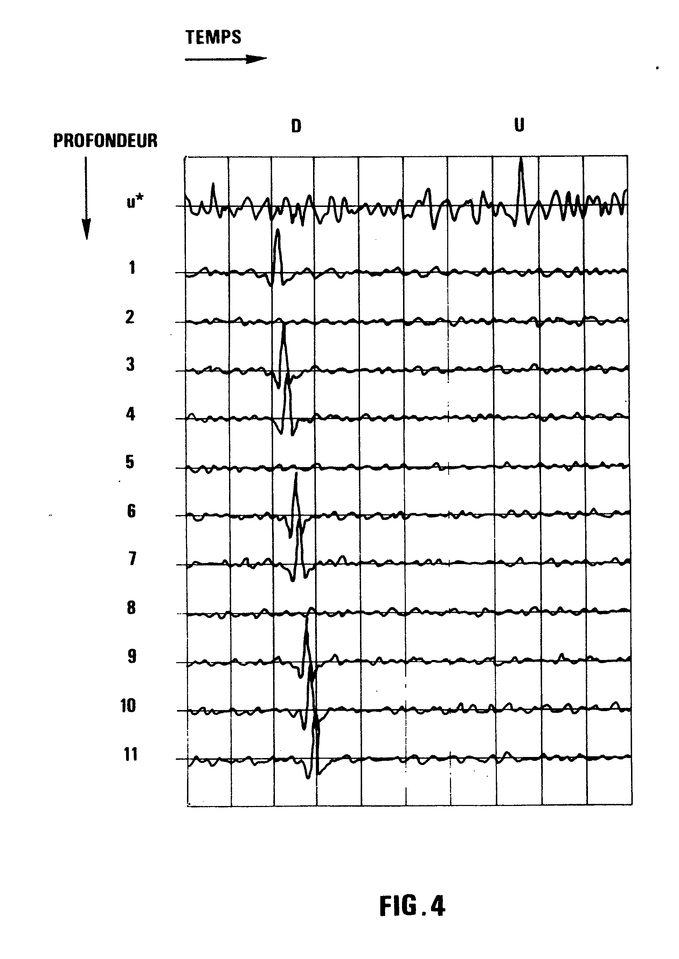

Sur les diagrammes de la figure 4, réalisés à partir de données synthétiques, comme sur le profil sismique vertical de la figure 5, résultant de mesures réelles, on observe des pics correspondant aux ondes descendantes et on peut vérifier qu'ils se décalent régulièrement d'une trace à l'autre. En revanche, dans les deux cas, les composantes d'ondes remontantes ont un rapport signal/bruit trop faible pour qu'on puisse les détecter.

Un filtrage des signaux recueillis est donc nécessaire pour mettre en évidence l'onde remontante avec une netteté suffisante.

Le principe de filtrage proposé est le suivant:

Parmi les N signaux de détection à traiter $s_1 \ldots s_N$, prélevons une série de n signaux $S_k (t)$ avec $1 \leq k \leq n$.

Posons qu'il existe des estimations $u_1^* (t)$ et $d_1^* (t)$ des composantes d'onde remontante et d'onde descendante qui sont optimales pour l'ensemble des n signaux ci-dessus.

Compte tenu de ce qui précède, on peut écrire, suivant la formulation des moindres carrés, qu'il faut minimiser l'expression

$$\sum_{k=1}^{n} |\, s_k (t) - u_1^* (t + t_k) - d_1^* (t - t_k)\, |^2 \tag{I}$$

Dans le domaine des fréquences, l'expression (I) ci-dessus devient

$$\sum_{k=1}^{n} |\, S_k - \alpha_k U_1^* - \overline{\alpha}_k - D_1^* \,|^2 \tag{II}$$

où $S_k$, $U_1^*$ et $D_1^*$ sont les transformées de Fourier de $s_k (t)$, $u_1^* (t)$ et $d_1^* (t)$ et $\alpha_k$ et $\overline{\alpha}_k$ sont respectivement les opérateurs $\exp(-it_k \omega)$ et $\exp(it_k \omega)$ i étant l'opérateur complexe et $\omega$ la pulsation. On a bien entendu $t_1 = 0$ et $\alpha_1 = \overline{\alpha}_1 = 1$.

En annulant les dérivées par rapport à $U_1^*$ et $D_1^*$ de l'expression (II) on obtient les équations

$$\sum_{k=1}^{n} \overline{\alpha}_k S_k - U_1^* \cdot \sum_{k=1}^{n} \overline{\alpha}_k^2 - n D_1^* = 0 \tag{III}$$

$$\sum_{k=1}^{n} \alpha_k S_k - D_1^* \cdot \sum_{k=1}^{n} \alpha_k^2 - n U_1^* = 0 \tag{IV}$$

4

On en tire, en résolvant les équations (III) et (IV) en $U_1^*$

$$U_1^* = \frac{\sum_{k=1}^{n} \alpha_k \cdot S_k - \sum_{k=1}^{n} \alpha_k^2 \cdot \sum_{k=1}^{n} \overline{\alpha}_k \cdot S_k}{n^2 - \sum_{k=1}^{n} \alpha_k^2 \cdot \sum_{k=1}^{n} \overline{\alpha}_k^2} \qquad (V)$$

$\overline{\alpha}_k S_k$ est la transformée de Fourier du signal $s_k(t+t_k)$, obtenu en avançant le signal $s_k(t)$ du temps $t_k$ par rapport au signal $s_1(t)$. En décalant ainsi $s_k(t)$ par rapport à $s_1(t)$, on réalise l'alignement des composantes d'onde descendante. La somme

$$\sum_{k=1} \overline{\alpha}_k S_k$$

est donc la transformée de Fourier $Z_1$ d'un signal $z_1(t)$ obtenu en additionnant le signal $s_1(t)$ et les signaux $s_k(t+t_k)$.

De même $\alpha_k S_k$ est la transformée de Fourier du signal $s_k(t-t_k)$ obtenu en retardant $s_k(t)$ par rapport à $s_1(t)$, ce décalage produisant l'alignement des composantes d'onde remontante.

La somme

$$\sum_{k=1}^{n} \overline{\alpha}_k S_k$$

est donc la transformée de Fourier $Y_1$ d'un signal $y_1(t)$ obtenu en additionnant le signal $s_1(t)$ et les signaux $s_k(t-t_k)$.

L'expression devient alors

$$U_1^* = \frac{nY_1 - Z_1 \cdot \sum_{k=1}^{n} \alpha_k^2}{n^2 - \sum_{k=1}^{n} \alpha_k^2 \cdot \sum_{k=1}^{n} \overline{\alpha}_k^2} \qquad (VI)$$

et à partir de $U_1^*$, on calcule $u_1^*(t)$ par transformation de Fourier inverse.

Les temps $t_k$ peuvent être déterminés par simple lecture à partir d'une diagraphie acoustique du puits. Toutefois, un mode de calcul préférable consiste à détecter les pics correspondant aux premières arrivées des ondes descendantes et à mesurer le temps qui les sépare.

Le procédé ci-dessus fournit donc de façon simple une estimation optimale des composantes d'onde remontante.

On recommence ensuite ces opérations pour déterminer un signal $u_2^*(t)$ à partir des signaux $s_2 \ldots s_{n+1}$, et ainsi de suite jusqu'au groupe $s_{N-1+1} \ldots s_N$. Finalement, à partir de N signaux à traiter, on obtient une série de $(N-n+1)$ signaux $u_i^*(t)$ par transformation de Fourier inverse de $U_i^*$ obtenue par l'expression généralisée suivante:

$$U_i^* = \frac{nY_i - Z_i \sum_{k=i}^{n+i-1} \alpha_{i,k}^2}{n^2 - \sum_{k=i}^{n+i-1} \alpha_{i,k}^2 \sum_{k=i}^{n+i-1} \overline{\alpha}_{i,k}^2} \qquad (VI)\,bis$$

où $Y_i$ et $Z_i$ les transformés de Fourier de $y_i(t)$ et $z_i(t)$ et $\alpha_{i,k}$ et $\overline{\alpha_{i,k}}$ sont respectivement les opérateurs $\exp(-it_{i,k}\omega)$ et $\exp(it_{i,k}\omega)$ avec

$$t_{i,k} = \frac{X_k - X_i}{V_{i,k}}$$

On obtient de façon correspondante $D_1^*$ par l'expression

$$D_1^* = \frac{nZ_1 - Y_1 \sum\limits_{k=1}^{n} \bar{\alpha}_k^2}{n^2 - \sum\limits_{k=1}^{n} \alpha_k^2 \cdot \sum\limits_{k=1}^{n} \bar{\alpha}_k^2} \qquad \text{(VII)}$$

et on tire la transformée de Fourier inverse $d_1^*(t)$, estimation optimale des composantes d'onde descendante, puis successivement tous les signaux $d_i^*(t)$ par transformation de Fourier inverse de $D_i$ obtenue par l'expression généralisée suivante:

$$D_i^* = \frac{nZ_i - Y_i \sum\limits_{k=i}^{n+i-1} \bar{\alpha}_{i,k}^2}{n^2 - \sum\limits_{k=i}^{n+i-1} \alpha_{i,k}^2 \cdot \sum\limits_{k=i}^{n+i-1} \bar{\alpha}_{i,k}^2} \qquad \text{(VII) bis}$$

Les signaux $d_i^*(t)$ sont nécessaires pour l'application de la déconvolution à laquelle on procède de façon classique après le filtrage.

En alignant les enregistrements des signaux $u_i^*(t)$ sous la forme d'un PSV, on observera que les pics correspondants sont parfaitement alignés et très nets si le miroir 20 est sensiblement horizontal.

Si l'on constate que les pics sont moins nets et sont décalés l'un par rapport à l'autre, il faut supposer que le miroir 20 présente un pendage assez accusé.

Dans ce cas, on détermine les écarts $\varepsilon_k$ entre la position des pics et la position qu'ils occuperaient en l'absence de pendage et l'on recommence les opérations précédentes en remplaçant chaque opérateur $\bar{\alpha}_k$ par un opérateur $\gamma_k = \exp(i(t_k + \varepsilon_k)\omega)$.

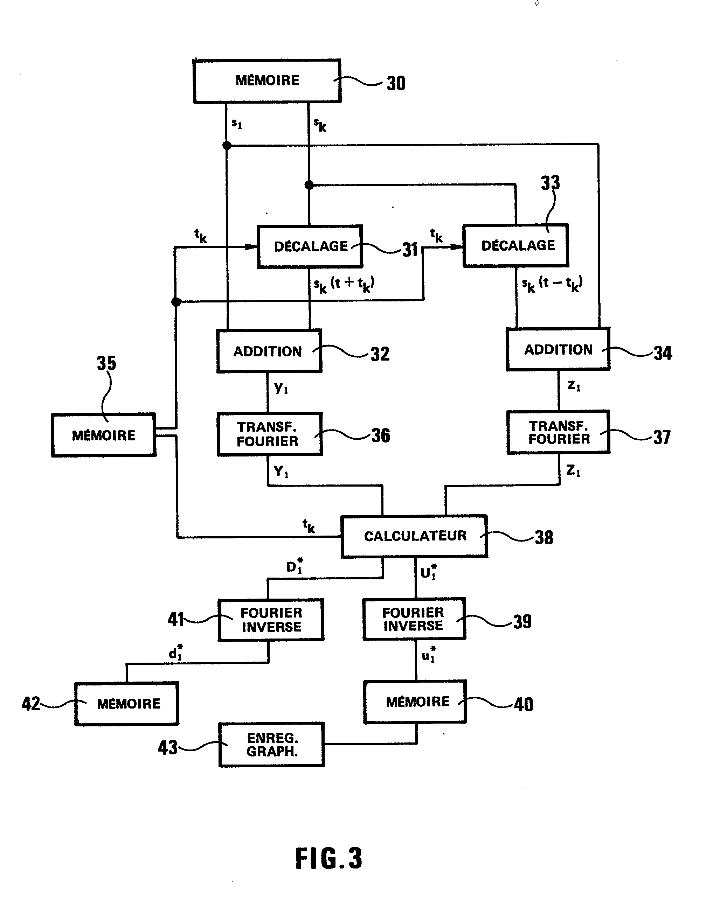

Le procédé de filtrage décrit est mis en œuvre à l'aide du dispositif de la figure 3.

Les signaux de détection ont été préalablement enregistrés et examinés pour que les signaux de qualité déficiente soient éliminés.

Il reste après cette sélection N signaux $s_1 \ldots s_N$ que l'on inscrit dans une mémoire 30.

La mémoire 30 est commandée pour fournir une série de n signaux correspondant à des niveaux successifs. On envisagera ici le traitement de la première série de signaux $s_1 \ldots s_k \ldots s_n$. Les signaux $s_2 \ldots s_k \ldots s_n$ sont appliqués à un premier circuit de décalage 31 qui les retarde respectivement des temps $t_2 \ldots t_k \ldots t_n$ par rapport à $s_1$. Le signal $s_1(t)$ et les signaux $s_k(t+t_k)$ obtenus sont appliqués à un additionneur 32 qui délivre le signal-somme $y_1(t)$. Les signaux $s_2 \ldots s_n$ sont également appliqués à un second circuit de décalage 33 qui les avance par rapport à $s_1$ respectivement des temps $t_2 \ldots t_k \ldots t_n$. Le signal $s_1(t)$ et les signaux $s_k(t-t_k)$ sont appliqués à un additionneur 34 qui fournit le signal-somme $z_1(t)$.

Les circuits de décalage 31 et 33 peuvent être constitués de façon connue pour l'homme de l'art, par un ensemble de registres à décalage. Les temps $t_k$ sont déterminés en mesurant l'intervalle de temps entre les premières arrivées des ondes descendantes pour les signaux $s_1$ et $s_k$ et sont enregistrés dans une mémoire 35.

Des dispositifs 36 et 37 fournissant les transformées de Fourier délivrent des signaux représentatifs des fonctions $Y_1$ et $Z_1$ à partir des sommes $y_1$ et $z_1$.

Un calculateur 38 est programmé pour fournir les grandeurs $U_1^*$ et $D_1^*$ à partir des signaux $Y_1$ et $Z_1$ et des temps $t_k$, conformément aux relations (VI) et (VII) ci-dessus.

Un dispositif 39 fournissant la transformée de Fourier inverse délivre un signal $u_1^*$ à partir du signal $U_1^*$. Le signal $u_1^*$ est inscrit dans une mémoire 40.

Un dispositif 41 fournit de même la transformée de Fourier inverse $d_1^*$, qui est inscrite dans une mémoire 42.

Ce traitement est ensuite répété en décalant d'un niveau, c'est-à-dire avec la série de signaux $s_2 \ldots s_{n+1}$, et ainsi de suite jusqu'à ce que le dernier signal de la série soit le signal $s_N$.

Les signaux $d_i^*(t)$ obtenus seront utilisés dans un traitement de déconvolution ultérieur.

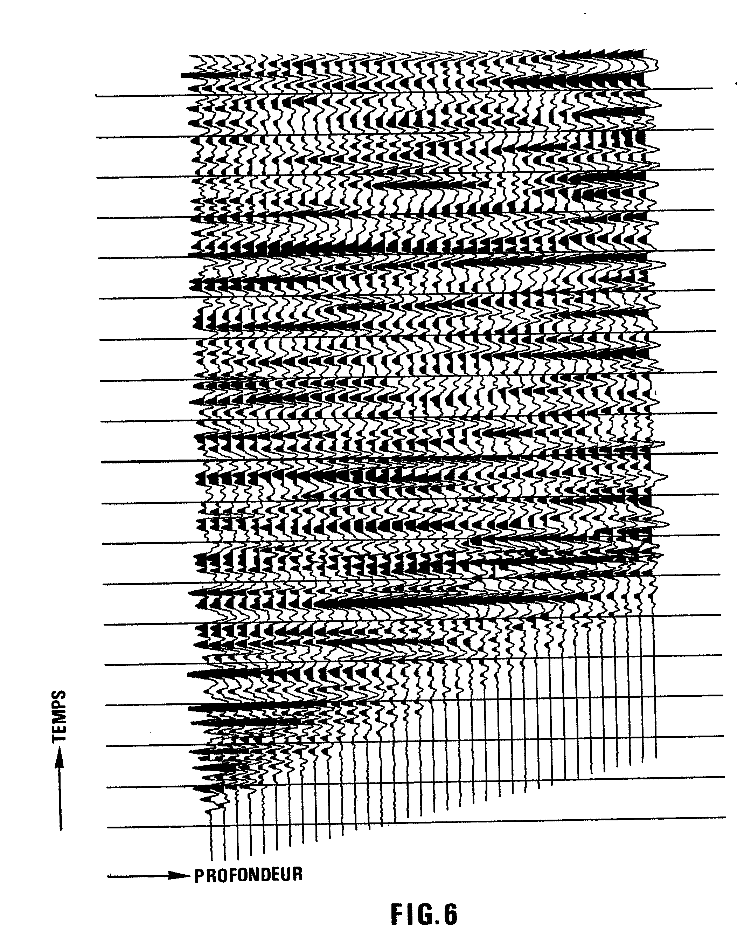

Les signaux $u_i^*(t)$ obtenus sont appliqués à un enregistreur graphique 43 qui produit un profil sismique vertical regroupant tous les diagrammes de signaux. La figure 6 montre le profil sismique obtenu à partir des traces de départ constituant le profil sismique de la figure 5, les traces étant alignées de façon que les ondes remontantes apparaissent verticalement.

Les diagrammes de la figure 4 illustrent les résultats obtenus à l'aide du procédé de filtrage décrit ci-dessus.

Les diagrammes 4-1 à 4-11 représentent des signaux de détection correspondant à 11 niveaux successifs réalisés à partir de données synthétiques. Tous les temps de propagation entre niveaux consécutifs sont égaux. On observe sur toutes les traces, à l'exception des traces 4-2, 4-5 et 4-8, des pics correspondant aux ondes descendantes. Les ondes remontantes en revanche ne peuvent pratiquement pas être distinguées du bruit.

Pour le filtrage, on élimine les traces 4-2, 4-5 et 4-8 dont la qualité est manifestement déficiente.

On obtient par le procédé de filtrage ci-dessus un signal u* (t) qui présente un pic (U) très marqué correspondant à l'onde remontante. La composante d'onde descendante (D) est au contraire très atténuée.

Cet exemple montre que le procédé de filtrage selon l'invention n'impose aucune condition précise en ce qui concerne les temps de propagation et donc les niveaux de détection. En particulier, il n'est nullement nécessaire que les temps de propagation entre niveaux consécutifs soient égaux.

Ainsi, sur la figure 4, si l'on considère uniquement les signaux effectivement utilisés, les temps de propagation entre niveaux consécutifs ne sont pas tous égaux, mais on obtient une très bonne accentuation de l'onde remontante.

Le fait que le procédé selon l'invention ne repose par sur l'hypothèse de temps de propagation égaux entre niveaux consécutifs est un avantage pratique très important.

Cela permet en premier lieu de choisir librement les niveaux de détection de façon à optimiser le couplage acoustique du détecteur avec la formation.

Si la mesure a lieu en trou découvert, on pourra déterminer les zones les plus favorables à l'aide d'une diagraphie de diamètre, indiquant les zones de diamètre régulier, et d'une diagraphie acoustique indicative de la vitesse de propagation des ondes acoustiques et donc de la compacité des formations traversées.

Si l'on opère en trou tubé, le facteur déterminant pour le couplage sera la qualité de la liaison du ciment au tubage. On pourra déterminer les zones favorables à l'aide d'une diagraphie telle qu'obtenue par le dispositif selon le brevet français No. 2 400 613.

La liberté dans le choix des niveaux de détection n'existe toutefois qu'à l'intérieur d'une certaine plage.

Au-delà d'un certain intervalle entre niveaux consécutifs, la corrélation entre traces consécutives deviendrait moins fiable. On admet généralement que cet intervalle ne doit pas dépasser environ le tiers de la longueur d'onde des ondes acoustiques (voir l'ouvrage précité de E.I. Gal'perin, page 27). Pour fixer les idées, on peut indiquer un écart maximal d'environ 40 mètres.

On peut d'autre part considérer comme raisonnable un écart minimal d'environ 10 mètres.

En ce qui concerne le nombre n de signaux que l'on utilise pour déterminer chaque signal $u_i^*$ (t), le choix dépend du rapport signal/bruit souhaité. On préfère par commodité choisir un nombre impair, et un bon compromis entre la qualité du signal produit et la durée du traitement est obtenu avec n = 7, 9 ou 11.

Une variante simplifiée du procédé de filtrage consiste à déterminer les signaux $u_i^*$ sans passer dans le domaine des fréquences, les valeurs obtenues n'étant alors que des approximations.

Si l'on part de l'expression (I) ci-dessus

$$\sum_{k=1}^{n} | s_k (t) - u^* (t+t_k) - d^* (t-t_k) |^2$$

et qu'on annule sa dérivée par rapport à d* (t), on obtient

$$\sum_{k=1}^{n} \left( \dot{s}_k (t+t_k) - d^* (t) - u^* (t+2t_k) \right) = 0 \qquad \text{(VIII)}$$

c'est-à-dire

$$z_1 (t) - nd_1^* (t) - \sum_{k=1}^{n} u_1^* (t+2t_k) = 0 \qquad \text{(IX)}$$

On obtient de façon correspondante, en annulant la dérivée de (I) par rapport à $u_1^*$ (t)

$$u_1^* (t) - \frac{1}{n} y_1 (t) + \frac{1}{n} \sum_{i=1}^{n} d_1 (t-2t_i) = 0 \qquad \text{(X)}$$

En exprimant le troisième terme de cette équation à l'aide de l'équation (IX), et en reportant l'expression obtenue dans l'équation (X), on obtient

$$u_1^* (t) = \frac{1}{n} y_1 (t) - \frac{1}{n^2} \sum_{k=1}^{n} z_1 (t-2t_k) - \frac{1}{n^2} \sum_{k=1}^{n} \sum_{i=1}^{n} u_1^* (t-2t_i-2t_k) \qquad \text{(XI)}$$

7

En négligeant le troisième terme, et en généralisant l'expression on arrive à la valeur approximative

$$u_i^*(t) = \frac{1}{n} \, y_i(t) - \frac{1}{n^2} \sum_{k=i}^{n+i-1} z_i(t - 2\,t_{i,k}) \qquad \text{(XII)}$$

Le traitement nécessaire pour déterminer les signaux $u_i^*(t)$ dans cette variante est extrêmement simple puisqu'il ne comporte aucune transformation de Fourier.

On obtient de façon correspondante, pour les ondes remontantes, la valeur approximative

$$d_i^*(t) = \frac{1}{n} \, z_i(t) - \frac{1}{n^2} \sum_{k=i}^{n+i-1} y_i(t + 2\,t_{i,k}) \qquad \text{(XIII)}$$

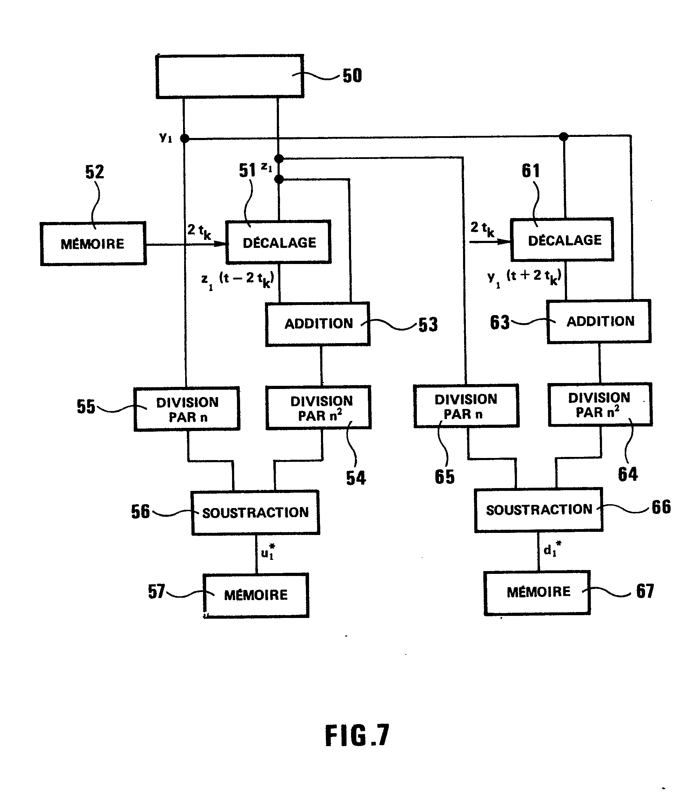

La figure 7 représente le dispositif pour la mise en œuvre de cette variante.

Le bloc 50 sur la figure 7 regroupe l'ensemble des éléments 30—34 de la figure 3 et fournit les signaux $y_1(t)$ et $z_1(t)$.

Un circuit de décalage 51 recevant le signal $z_1(t)$ fournit les signaux décalés $z_1(t - 2t_k)$, les temps $2t_k$ étant fournis par une mémoire 52. Les signaux $z_1(t)$ et $z_1(t - 2t_k)$ sont appliqués à un additionneur 53. La somme obtenue est divisée par $n^2$ dans un diviseur 54.

Le signal $y_1(t)$ est divisé par n dans un diviseur 55, et les sorties des diviseurs 53 et 54 sont reliées à un soustracteur 56 qui fournit le signal $u_1^*(t)$ recherché, lequel est inscrit dans une mémoire 57.

Le signal $y_1(t)$ est appliqué d'autre part à un circuit de décalage 61 qui fournit les signaux $y_1(t + 2t_k)$, qui sont appliqués avec le signal $y_1(t)$ à un additionneur 63 dont le signal de sortie est divisé par $n^2$ dans un diviseur 64.

Le signal $z_1(t)$ est divisé par n dans un diviseur 65, et un soustracteur 66 recevant les sorties des diviseurs 64 et 65 fournit le signal $d_1^*(t)$ qui est inscrit dans une mémoire 67.

Dans l'approche exposée précédemment, on a considéré que les ondes sismiques, d'un niveau $x_1$ à un niveau $x_k$, n'étaient soumises à aucune distorsion et ne subissaient que le décalage $t_k$ correspondant au temps de propagation dans la tranche délimitée par ces niveaux. Cela revient à négliger les effets de réflexion et de transmission dus aux variations d'impédance acoustique à l'interieur de cette tranche.

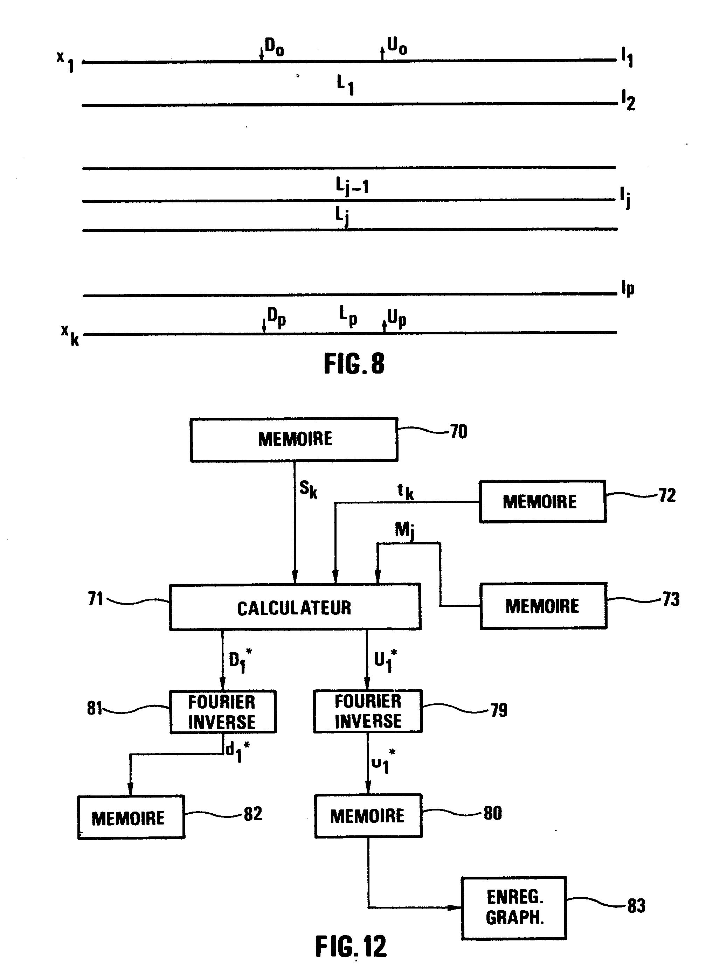

Une approche plus précise doit prendre en compte le caractère stratifié du milieu de propagation, illustré par la figure 8. On suppose que le milieu est parfaitement élastique et que la tranche comprise entre les niveaux $x_1$ et $x_k$ est composée d'une série de p couches homogènes du point de vue acoustique et ayant des temps de transit identiques égaux à $t_k/p$. Ces hypothèses n'enlèvent rien à a généralité des résultats ci-après.

Chaque couche $L_j$ possède une impédance acoustique $M_j$. A chaque interface $I_j$ entre deux couches $L_{j-1}$ et $L_j$ d'impédances respectives $M_{j-1}$ et $M_j$, une onde incidente donne naissance à une onde transmise et à une onde réfléchie. Le coefficient de transmission $T_j$ et le coefficient de réflexion $C_j$ relatifs à l'interface $I_j$ sont définis par les relations ci-après

$$T_j = 1 + C_j \qquad \text{(XIV)}$$

$$C_j = \frac{M_j - M_{j-1}}{M_j + M_{j-1}} \qquad \text{(XV)}$$

Les coefficients $C_j$ et $T_j$ peuvent donc être calculés à partir des impédances $M_j$, qui peuvent être déterminées à l'aide de diagraphies acoustiques effectuées dans le puits.

Connaissant l'ensemble des coefficients $T_j$ et $C_j$, les composantes d'ondes remontantes $U_p$ et descendante $D_p$ au dessus du niveau $x_k$ peuvent être reliées aux composantes $U_o$ et $D_o$ au dessus du niveau $x_1$ à l'aide de l'équation (8-3-2) de Claerbout, Fundamentals of Geophysical Data Processing, McGraw Hill (1976), exprimée en termes de transformée z

$$\begin{bmatrix} U_p \\ D_p \end{bmatrix} = \frac{1}{\sqrt{z^p} \displaystyle\prod_{j=1}^{p} T_j} \begin{bmatrix} F_p z^p & \overline{G}_p \\ G_p z^p & \overline{F}_p \end{bmatrix} \begin{bmatrix} U_o \\ D_o \end{bmatrix} \qquad \text{(XVI)}$$

où z est l'opérateur de retard égal à $\exp(2\,i\,\omega\,t_k/p)$ $F_p$ et $G_p$ sont donnés par les relations

$$F_p(z) = F_{p-1}(z) + C_p z \, G_{p-1}(z) \qquad \text{(XVII)}$$

$$G_p(z) = C_p \, F_{p-1}(z) + z G_{p-1}(z) \qquad \text{(XVIII)}$$

avec

$$F_o(z) = 1 \text{ et } G_o(z) = 0$$

et

$$\prod_{j=1}^{p} T_j = T_1 \ldots T_j \ldots T_p$$

Les grandeurs physiques accessibles à la mesure, pression et vitesse verticale, sont reliées non aux composantes $U_p$ et $D_p$, mais à la somme et à la différence de ces composantes. On obtient à partir de (XVI) la relation

$$\begin{bmatrix} U_p + D_p \\ U_p - D_p \end{bmatrix} = \frac{1}{\sqrt{z^p}} \begin{bmatrix} A_p & z^p\,\overline{A}_p \\ B_p & z^p\,\overline{B}_p \end{bmatrix} \begin{bmatrix} U_o \\ D_o \end{bmatrix} \tag{XIX}$$

en posant

$$A_p = \frac{F_p + G_p}{\displaystyle\prod_{j=1}^{p} T_j}$$

$$B_p = \frac{F_p - G_p}{\displaystyle\prod_{j=1}^{p} T_j}$$

Les termes $A_p(z)$ et $B_p(z)$ sont donnés par les relations, tirées de (XVII) et (XVIII):

$$A_p = 1/2\ [(1+z)\,A_{p-1} + (1-z)\,B_{p-1}] \tag{XX}$$

$$B_p = 1/2\ \frac{1-C_p}{1+C_p}\ [(1-z)\,A_{p-1} + (1+z)\,B_{p-1}] \tag{XXI}$$

avec $A_o = 1$ et $B_o = 1$

Avec les notations précédentes:

$$S_p(z) = U_p + D_p = \sqrt{z^{-p}}\,A_p\,U_o + \sqrt{z^p}\,\overline{A}_p\,D_o \tag{XXII}$$

On note que lorsqu'on néglige les effets de transmission ($A_p = 1$), cette équation devient

$$S_p(z) = \sqrt{z^{-p}}\,U_o + \sqrt{z^p}\,D_o \tag{XXIII}$$

et en passant dans le domaine des fréquences, avec les notations précedentes, on retrouve

$$S_p(\omega) = \alpha_p\,U_o + \overline{\alpha}_p\,D_o \qquad \alpha_p = \exp(-i\,\omega\,t_p)$$

La prise en compte des effets de réflexion conduit donc simplement à multiplier les opérateurs de retard $\alpha_p$ et $\overline{\alpha}_p$ respectivement par les opérateurs $A_p$ et $\overline{A}_p$.

Dans le domaine des temps, ceci revient à corriger les signaux $s_k(t + t_k)$ et $s_k(t - t_k)$ en leur appliquant des opérateurs de convolution correspondant aux opérateurs $A_p$ et $\overline{A}_p$.

Pour la détermination d'estimations $U_i^*$ et $D_i^*$ optimales pour une série de n signaux $s_k(t)$ ($i \leq k \leq n + i - 1$), on minimise alors, au lieu de (II) ci-dessus, l'expression généralisée

$$\sum_{k=i}^{n+i-1} |\,S_k - \alpha_{i,k}\,A_{i,k}\,U_i^* - \overline{\alpha}_{i,k}\,\overline{A}_{i,k}\,D_i^*\,|^2 \tag{XXIV}$$

et le calcul conduit pour $U_i^*$ et $D_i^*$ à des expressions analogues aux relations (VI)bis et (VII)bis ci-dessus, dans lesquelles $\alpha_{i,k}$ et $\overline{\alpha}_{i,k}$ sont remplacés respectivement par $\beta_{i,k} = \alpha_{i,k}\,A_{i,k}$ et $\overline{\beta}_{i,k} = \overline{\alpha}_{i,k}\,\overline{A}_{i,k}$ et n est remplacé par

$$P_{i,n} = \sum_{k=i}^{n+i-1} A_{i,k}\,\overline{A}_{i,k}$$

On a en effet

$$U_i^* = \frac{P_{i,n} Y_i' - Z_i' \cdot \sum\limits_{k=i}^{n+i-1} \beta_{i,k}^2}{P_{i,n}^2 - \sum\limits_{k=i}^{n+i-1} \beta_{i,k}^2 \cdot \sum\limits_{k=i}^{n+i-1} \overline{\beta}_{i,k}^2} \tag{XXV}$$

$$D_i^* = \frac{P_{i,n} Z_i' - Y_i' \cdot \sum \overline{\beta}_{i,k}^2}{P_{i,n}^2 - \sum\limits_{k=i}^{n+i-1} \beta_{i,k}^2 \cdot \sum\limits_{k=i}^{n+i-1} \overline{\beta}_{i,k}^2} \tag{XXVII}$$

dans lesquelles

$$Y_i' = \sum_{k=i}^{n+i-1} \alpha_{i,k} A_{i,k} S_k$$

$$Z_i' = \sum_{k=i}^{n+i-1} \overline{\alpha}_{i,k} \overline{A}_{i,k} S_k$$

$Y_i'$ et $Z_i'$ étant les transformées de Fourier des sommes $y_i'(t)$ et $z_i'(t)$ correspondant aux niveaux $y_i(t)$ et $z_i(t)$ précédents.

On obtient comme précédemment le signal $u_i^*(t)$ par transformation de Fourier inverse de $U_i^*$. L'ensemble des signaux $u_i^*(t)$ est regroupé en un profil sismique vertical.

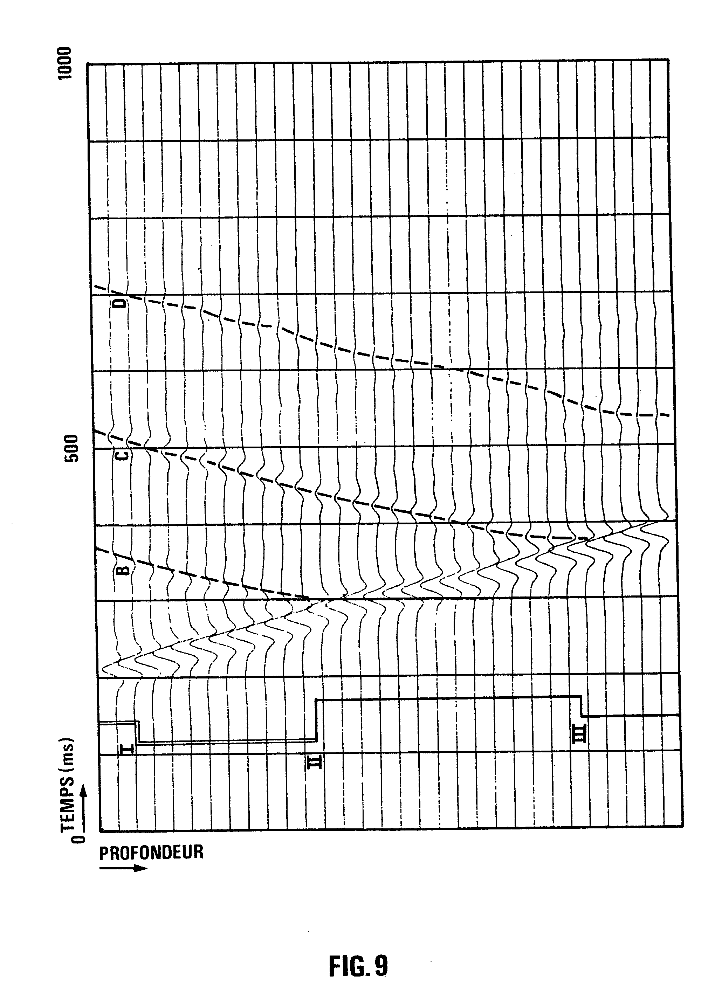

Les figures 9 à 11 illustrent les résultats obtenus lorsqu'on prend en compte les effets d'interface.

La figure 9 montre un profil sismique vertical composé de 30 traces et obtenu à partir de données synthétiques. L'espacement entre niveaux est irrégulier. La ligne en trait plein indique les variations de l'impédance acoustique le long de la tranche comprise entre les niveaux extrêmes 1 et 30. On note trois sauts d'impédance générateurs d'effets de réflexion. L'interface I est située entre les niveaux 2 et 3, l'interface II entre les niveaux 11 et 12 et l'interface III entre les niveaux 25 et 26.

Sur la figure 9, l'onde descendante correspondant aux premières arrivées est clairement visible, cependant que les ondes remontantes qui peuvent être décelées sont de faible niveau. Elles sont repérées par des courbes B, C et D en trait pointillé.

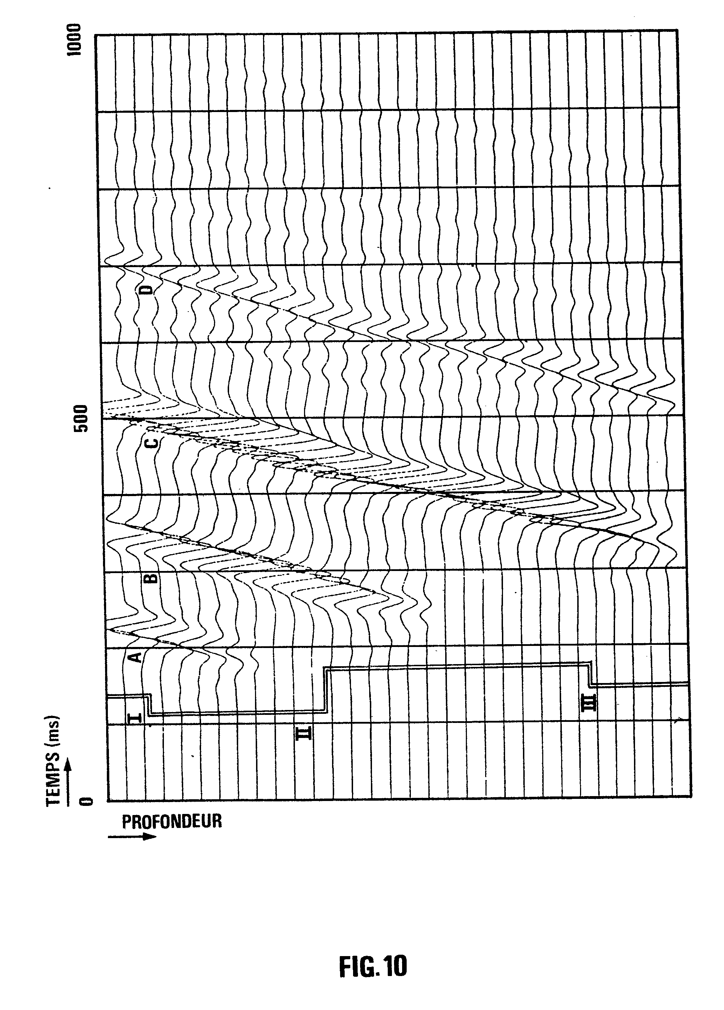

La figure 10 illustre l'effet du filtrage fondé sur l'approche simplifiée. Les ondes B, C et D décelables sur la figure 10 sont parfaitement mises en évidence, et il apparaît en outre très clairement une onde remontante A.

L'analyse des ondes remontantes en liaison avec la position des interfaces réflexives conduit à conclure que l'onde A est liée à l'interface I, l'onde B à l'interface II et l'onde C à l'interface III. On constate toutefois que les ondes A, B et C se prolongent de façon anormale au delà des interfaces respectifs I, II et III.

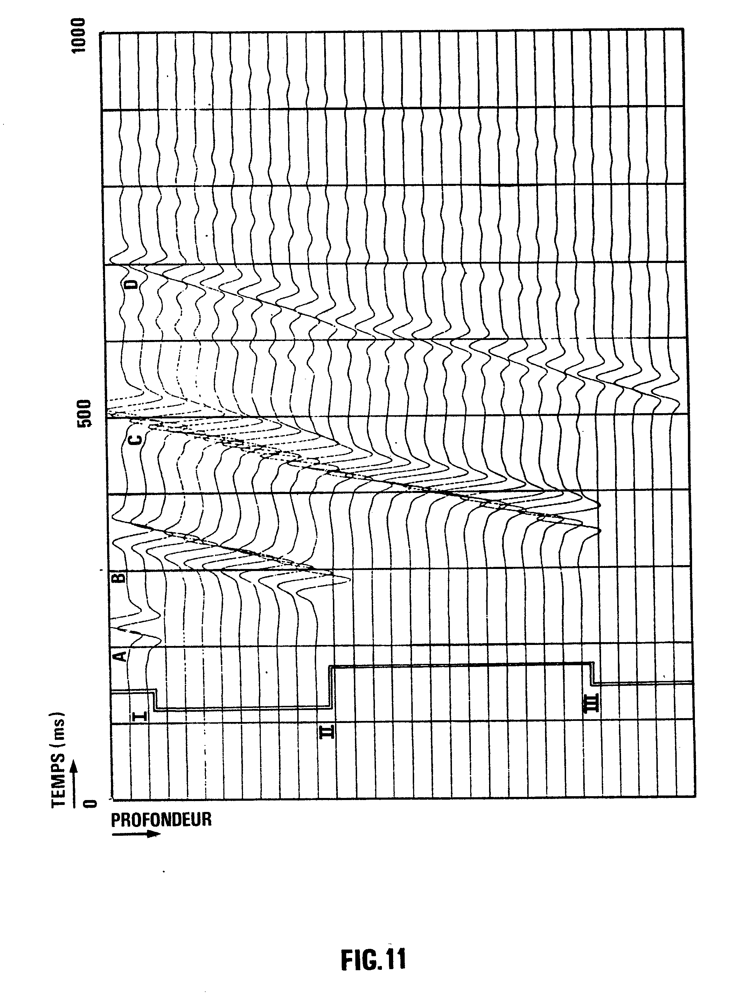

La figure 11 illustre le filtrage obtenu selon l'approche plus exacte tenant compte des effets de réflexion. Une différence nette apparaît par rapport à la figure 10 en ce que les prolongements susmentionnés des ondes A, B et C au delà des interfaces correspondantes ont disparu. La relation de causalité entre eux devient ainsi manifeste. L'onde D n'est pas modifiée et on peut conclure qu'elle est liée à un miroir plus profond que le niveau 30.

La figure 12 représente un dispositif pour la mise en œuvre du procédé de filtrage tenant compte des effets de réflexion.

Une mémoire 70 identique à la mémoire 30 de la figure 3 fournit les signaux $s_k$ à un calculateur 71. Celui-ci reçoit d'une mémoire 72 les temps de transit $t_k$ correspondants, déterminés comme indiqué précédemment.

Une autre mémoire 73 contient les valeurs de l'impédance acoustique $M_j$ sur toute la section comprise entre les niveaux extrêmes. Ces valeurs sont calculées, pour chaque profondeur, à partir des données de densité et de vitesse de propagation mesurées par des diagraphies dans le forage.

Le calculateur 71, à l'aide des données $t_k$ et $M_j$, exécute les calculs correspondant aux équations (XXV) et (XXVI) et fournit les estimations optimales $U_i^*$ et $D_i^*$. Les circuits 79 et 81 fournissent les transformées de Fourier inverses $u_i^*(t)$ et $d_i^*(t)$, qui sont enregistrés dans des mémoires 80, 82. Les données inscrites dans la mémoire 80 sont appliquées à un enregistreur graphique 83.

10

## Revendications

1. Procédé d'exploration sismique dans lequel on filtre N signaux de détection $s_1(t), \ldots s_N(t)$, le symbole (t) indiquant qu'il s'agit d'une fonction du temps t, parmi M signaux de détection avec $M \geq N$, dans un puits, chacun desdits M signaux étant produit en réponse à une émission d'ondes acoustiques à partir d'une source en surface et chacun desdits signaux comprenant une composante d'onde descendante et une composante d'onde remontante, le filtrage comprenant les opérations suivantes:
Dans un premier cycle avec index $i = 1$

— prélever parmi les N signaux à traiter un groupe de n signaux $s_k(t)$, avec $i \leq k \leq n + i - 1$, détectés à des niveaux $x_k$ successifs;
— déterminer les temps de propagation $t_{i,k}$ des ondes acoustiques entre le niveau $x_i$ et chaque niveau $x_k$, étant évident que $t_{i,i} = 0$;
— décaler chaque signal $s_k(t)$ en l'avançant du temps $t_{i,k}$ par rapport au signal $s_i(t)$ pour obtenir ainsi un signal $s_k(t + t_{i,k})$ en correspondance de chaque signal $s_k(t)$, de façon à aligner chacune desdites composantes d'onde descendante;
— additionner les signaux $s_k(t + t_{i,k})$ pour obtenir un signal $z_i(t)$ où la composante d'onde descendante est accentuée;
— décaler chaque signal $s_k(t)$ en le retardant du temps $t_{i,k}$ par rapport au signal $s_i(t)$ pour obtenir ainsi un signal $s_k(t - t_{i,k})$ en correspondance de chaque signal $s_k(t)$ de façon à aligner chacune desdites composantes d'onde remontante;
— additionner les signaux $s_k(t - t_{i,k})$ pour obtenir un signal $y_i(t)$ où la composante d'onde remontante est accentuée;

caractérisé par le fait que ledit filtrage comprend en outre les opérations consistant à:

— générer un signal $u_i^*(t)$ défini comme une estimation optimale au sens des moindres carrés et représentatif de la composante totale de l'onde remontante pour l'ensemble des signaux $s_k(t)$ à partir des signaux $y_i(t)$ et $z_i(t)$;
— enregistrer ce signal $u_i^*(t)$;

dans les cycles successifs jusqu'au cycle $N - n + 1$, répéter les opérations du premier cycle, où l'index $i = 2, 3 \ldots N - n + 1$ respectivement.

2. Procédé selon la revendication 1, caractérisé par le fait que le signal $u_i^*(t)$ est obtenu en minimisant l'expression suivante au sens des moindres carrés:

$$\sum_{k=i}^{k=n+i-1} |s_k(t) - \mu_i^*(t + t_{i,k}) - d_i^*(t - t_{i,k})|^2$$

dans laquelle $d_i^*(t)$ représente une estimation optimale de la composante totale de l'onde descendante.

3. Procédé selon la revendication 2, caractérisé par le fait que le signal $u_i^*(t)$ est obtenu par transformation de Fourier inverse de l'expression $U_i^*$, reliée à $y_i(t)$ et $z_i(t)$ par la relation

$$U_i^* = \frac{nY_i - Z_i \cdot \sum_{k=i}^{n+i-1} \alpha_{i,k}^2}{n^2 - \sum_{k=i}^{n+i-1} \alpha_{i,k}^2 \cdot \sum_{k=i}^{n+i-1} \overline{\alpha}_{i,k}^2}$$

où $Y_i$ et $Z_i$ sont les transformées de Fourier de $y_i(t)$ et $z_i(t)$ et $\alpha_{i,k}$ et $\overline{\alpha}_{i,k}$ sont respectivement les opérateurs $\exp(-it_{i,k}\omega)$ et $\exp(it_{i,k}\omega)$.

4. Procédé selon la revendication 3, caractérisé par le fait que l'on génère en outre le signal $d_i^*(t)$, estimation optimale de la composante d'onde descendante pour l'ensemble des signaux $s_k(t)$, à partir des signaux $y_i(t)$ et $z_i(t)$, par transformation de Fourier inverse du signal $D_i^*$ obtenu conformément à la relation

$$D_i^* = \frac{nZ_i - Y_i \cdot \sum_{k=i}^{n+i-1} \overline{\alpha}_{i,k}^2}{n^2 - \sum_{k=i}^{n+i-1} \alpha_{i,k}^2 \cdot \sum_{k=i}^{n+i-1} \overline{\alpha}_{i,k}^2}$$

5. Procédé selon la revendication 2, caractérisé par le fait qu'une valeur approchée du signal $u_i^*(t)$ est calculée par la relation:

$$u_i^*(t) = \frac{1}{n}\, y_i(t) - \frac{1}{n^2} \sum_{k=i}^{n+i-1} z_i\,(t - 2\,t_{i,k})$$

6. Procédé selon la revendication 5, caractérisé par le fait que l'on calcule une valeur approchée du signal $d_i^*(t)$, estimation optimale de la composante d'onde descendante pour l'ensemble des signaux $s_k(t)$, à partir des signaux $y_i(t)$ et $z_i(t)$, par la relation

$$d_i^*(t) = \frac{1}{n}\, z_i(t) - \frac{1}{n^2} \sum_{k=i}^{n+i-1} y_i\,(t + 2\,t_{i,k})$$

7. Procédé selon l'une des revendications 1 à 6, caractérisé par le fait que lesdites différentes profondeurs de détection sont fixées, à l'intérieur d'une plage déterminée, de manière à optimiser le couplage acoustique entre le détecteur et les formations souterraines qui entourent ledit détecteur.

8. Procédé selon l'une des revendications 1 à 7, caractérisé par le fait que, parmi les signaux de détection M, on élimine avant le filtrage les signaux de détection de qualité déficiente.

9. Procédé selon l'une des revendications 1 ou 2, caractérisé par le fait que les signaux $s_k(t - t_{i,k})$ et $s_k(t + t_{i,k})$ sont corrigés en appliquant respectivement un opérateur de convolution et un opérateur conjugué dudit opérateur de convolution qui est déterminé à partir des valeurs d'impédance acoustique des formations souterraines traversées par le puits et qui est représentatif des effets liés aux variations des valeurs de ladite impédance acoustique dans chaque tranche comprise entre les niveaux $x_i$ et $x_k$.

10. Procédé selon la revendication 9, caractérisé par le fait que le signal $u_i^*(t)$ est obtenu par transformation de Fourier inverse de l'expression $U_i^*$, par la relation

$$U_i^* = \frac{P_{i,n} Y_i' - Z_i' \cdot \displaystyle\sum_{k=i}^{n+i-1} \beta_{i,k}^2}{P_{i,n}^2 - \displaystyle\sum_{k=i}^{n+i-1} \beta_{i,k}^2 \cdot \sum_{k=i}^{n+i-1} \overline{\beta}_{i,k}^2} \qquad \text{(XXV)}$$

où $Y_1'$ et $Z_1'$ sont les transformations de Fourier de $y_1'(t)$ et $z_1'(t)$ obtenus en additionnant le signal $s_i(t)$ et les signaux $s_k(t)$ corrigés et respectivement avancés et retardés, $\beta_{i,k}$ et $\overline{\beta}_{i,k}$ sont respectivement les produits $\alpha_{i,k} \cdot A_{i,k}$ et $\overline{\alpha}_{i,k} \cdot \overline{A}_{i,k}$ et

$$P_{i,n} = \sum_{k=i}^{n+i-1} A_{i,k}\, \overline{A}_{i,k}$$

$A_{i,k}$ étant la transformée de Fourier dudit opérateur et $\overline{A}_{i,k}$ son conjugué.

11. Procédé selon la revendication 10, caractérisé par le fait que l'on génère en outre le signal $d_i^*(t)$, estimation optimale de la composante d'onde descendante pour l'ensemble des signaux $s_k(t)$, à partir des signaux $y_i'$ et $z_i'$, par transformation de Fourier inverse du signal $D_i^*$ obtenu conformément à la relation

$$D_i^* = \frac{P_{i,n} Z_i' - Y_i' \cdot \displaystyle\sum_{k=i}^{n+i-1} \overline{\beta}_{i,k}^2}{P_{i,n}^2 - \displaystyle\sum_{k=i}^{n+i-1} \beta_{i,k}^2 \cdot \sum_{k=i}^{n+i-1} \overline{\beta}_{i,k}^2} \qquad \text{(XXVII)}$$

12. Dispositif d'exploration sismique pour la mise en œuvre du procédé selon la revendication 1, comprenant un détecteur d'ondes acoustiques et des moyens pour déplacer ce détecteur dans un puits, une source d'ondes acoustiques, des moyens pour enregistrer les signaux produits par le détecteur, lesdits signaux comprenant des composantes d'onde descendante et des composantes d'onde remontante, et des moyens pour filtrer ces signaux afin d'en améliorer le rapport signal/bruit, caractérisé par le fait que les moyens de filtrage comprennent:

— une mémoire (30) contenant les N signaux à traiter et commandée pour fournir une série de n signaux $s_k(t)$ correspondant à des niveaux successifs $x_k$ avec $i \leq k \leq n + i - 1$;

— une mémoire (35) contenant les temps de propagation $t_{i,k}$ des ondes acoustiques du niveau $x_i$ à chaque niveau $x_k$;

— un premier circuit de décalage (31) pour avancer les signaux $s_k$ (t) respectivement du temps $t_{i,k}$ par rapport au signal $s_i$ (t);

— un premier additionneur (32) fournissant la somme $z_i$ (t) du signal $s_i$ (t) et des signaux $s_k$ (t) ainsi avancés;

— un second circuit de décalage (33) pour retarder les signaux $s_k$ (t) respectivement du temps $t_{i,k}$ par rapport au signal $s_i$ (t);

— un second additionneur (34) fournissant la somme $y_i$ (t) du signal $s_i$ (t) et des signaux $s_k$ (t) ainsi retardés;

— des moyens de calcul (36–39; 51–55) pour déterminer à partir des signaux $y_i$ (t) et $z_i$ (t) un signal $u_i^*$ (t), défini comme une estimation optimale au sens des moindres carrés et représentatif de la composante totale de l'onde remontante pour l'ensemble des signaux $s_k$ (t);

— des moyens d'enregistrement reliés aux moyens de calcul;

— et des moyens pour faire varier l'index i entre les valeurs 1 et $N-n+1$.

13. Dispositif selon la revendication 12, caractérisé par le fait que les moyens de calcul comprennent des dispositifs (36, 37) reliés aux additionneurs (32, 34) et fournissant les transformées de Fourier $Y_i$ et $Z_i$ de $y_i$ (t) et $z_i$ (t), un calculateur (38) fournissant la grandeur $U_i^*$ par la relation:

$$U_i^* = \frac{nY_i - Z_i \cdot \sum_{k=i}^{n+i-1} \alpha_{i,k}^2}{n^2 - \sum_{k=i}^{n+i-1} \alpha_{i,k}^2 \cdot \sum_{k=i}^{n+i-1} \overline{\alpha}_{i,k}^2}$$

où $\alpha_{i,k}$ et $\overline{\alpha}_{i,k}$ sont respectivement les opérateurs exp $(-it_{i,k}\,\omega)$ et exp $(it_{i,k}\,\omega)$, et un dispositif (39) fournissant la transformée de Fourier inverse et délivrant le signal $u_i^*$ (t) à partir de $U_i^*$.

14. Dispositif selon la revendication 13, caractérisée par le fait que le calculateur (38) génère également le signal $D_i^*$ conformément à la relation

$$D_i^* = \frac{nZ_i - Y_i \sum_{k=i}^{n+i-1} \overline{\alpha}_{i,k}^2}{n^2 - \sum_{k=i}^{n+i-1} \alpha_{i,k}^2 \cdot \sum_{k=i}^{n+i-1} \overline{\alpha}_{i,k}^2}$$

ce signal étant appliqué au dispositif (39) fournissant la transformation de Fourier inverse qui délivre un signal $d_i^*$ (t), estimation optimale de la composante d'onde descendante pour l'ensemble des traces $s_k$ (t).

15. Dispositif selon la revendication 12, caractérisé par le fait que les moyens de calcul comprennent un dispositif de décalage (51) fournissant à partir du signal $z_i$ (t) des signaux décalés $z_i$ $(t-2t_{i,k})$, un additionneur (53) fournissant la somme des signaux $z_i$ (t) et $z_i$ $(t-2t_{i,k})$, un circuit (54) divisant cette somme par $n^2$, un circuit (55) divisant par n le signal $y_i$ (t) et un soustracteur (56) relié aux deux circuits diviseurs (54, 55) et fournissant un signal $u_i^*$ (t) approché.

16. Dispositif selon la revendication 15, caractérisé par le fait que les moyens de calcul comprennent en outre un dispositif de décalage (61) fournissant à partir du signal $y_i$ (t) des signaux décalés $y_i$ $(t+2t_{i,k})$, un additionneur (63) fournissant la somme des signaux $y_i$ (t) et $y_i$ $(t+2t_{i,k})$, un circuit (64) divisant cette somme par $n^2$, un circuit (56) divisant par n le signal $z_i$ (t) et un soustracteur (66) relié aux deux circuits diviseurs (64, 65) et fournissant un signal $d_i^*$ (t) représentant de façon approximative une estimation optimale de la composante d'onde descendante pour l'ensemble des traces $s_k$ (t).

## Patentansprüche

1. Seismisches Explorationsverfahren, bei dem man N Erfassungssignale $s_1$ (t), ... $s_N$ (t), wobei das Symbol (t) anzeigt, daß es sich um eine Funktion der Zeit t handelt, aus M Erfassungssignalen mit $M \geq N$ in einem Bohrloch ausfiltert, wobei jedes der genannten M Signale erzeugt wird im Ansprechen auf eine akustische Wellenaussendung, ausgehend von einer Quelle an der Erdoberfläche und wobei jedes der genannten Signale eine Komponente der absteigenden Welle und eine Komponente der aufwärts zurückkehrenden Welle umfaßt, wobei die Filterung die folgenden Schritte umfaßt:

a) In einem ersten Zyklus mit Index i = 1
- Auswählen unter den N zu verarbeitenden Signalen einer Gruppe von n Signalen $s_k(t)$ mit $i \le k \le n+i-1$, erfaßt auf aufeinanderfolgenden Niveaus $x_k$;
- Bestimmen der Laufzeit $t_{i,k}$ der akustischen Wellen zwischen dem Niveau $x_i$ und jedem Niveau $x_k$, wobei offensichtlich gilt $t_{i,i} = 0$;
- Versetzen jedes Signals $s_k(t)$ durch Voreilen der Zeit $t_{i,k}$ relativ zum Signal $s_i(t)$ zum entsprechenden Ableiten eines Signals $s_k(t+t_{i,k})$ in Übereinstimmung mit jedem Signal $s_k(t)$ derart, daß jede der genannten Komponenten der absteigenden Welle ausgefluchtet wird,
- Addieren der Signale $s_k(t+t_{i,k})$ zum Ableiten eines Signals $z_i(t)$, bei dem die Komponente der absteigenden Welle akzentuiert ist,
- Versetzen jedes Signals $s_k(t)$ mittels Verzögerung der Zeiten $t_{i,k}$ relativ zum Signal $s_i(t)$ zum entsprechenden Ableiten eines Signals $s_k(t-t_{i,k})$ in Übereinstimmung mit jedem Signal $s_k(t)$ derart, daß jede der genannten Komponenten der wiederaufsteigenden Welle ausgefluchtet wird,
- Addieren der Signale $s_k(t-t_{i,k})$ zum Ableiten eines Signals $y_i(t)$, bei dem die Komponente der wiederaufsteigenden Welle akzentuiert ist,

dadurch gekennzeichnet, daß die genannte Filterung außerdem Schritte umfaßt, bestehend aus:

- Erzeugen eines Signals $u_i^*(t)$, definiert als eine Optimalabschätzung nach dem Prinzip der kleinsten Quadrate und repräsentativ für die Gesamtkomponente der wiederaufsteigenden Welle für die Gesamtheit der Signale $s_k(t)$, ausgehend von den Signalen $y_i(t)$ und $z_i(t)$;
- Registrieren dieses Signals $u_i^*(t)$;

b) in den darauffolgenden Zyklen bis zum Zyklus $N-n+1$ Wiederholen der Schritte des ersten Zyklus jeweils mit dem Index $i = 2, 3 \ldots N-n+1$.

2. Verfahren nach Anspruch 1, dadurch gekennzeichnet, daß das Signal $u_i^*(t)$ abgeleitet wird durch Minimieren des folgenden Ausdrucks nach dem Prinzip der kleinsten Quadrate:

$$\sum_{k=i}^{k=n+i-1} |s_k(t) - \mu_i^*(t+t_{i,k}) - d_i^*(t-t_{i,k})|^2$$

worin $d_i^*(t)$ eine Optimalabschätzung der Gesamtkomponente der absteigenden Welle repräsentiert.

3. Verfahren nach Anspruch 2, dadurch gekennzeichnet, daß das Signal $u_i^*(t)$ abgeleitet wird durch inverse Fourier-Transformation des Ausdrucks $U_i^*$, in Beziehung stehend mit $y_i(t)$ und $z_i(t)$ durch die Gleichung:

$$U_i^* = \frac{nY_i - Z_i \cdot \sum\limits_{k=i}^{n+i-1} \alpha_{i,k}^2}{n^2 - \sum\limits_{k=i}^{n+i-1} \alpha_{i,k}^2 \cdot \sum\limits_{k=i}^{n+i-1} \bar{\alpha}_{i,k}^2}$$

worin $Y_i$ und $Z_i$ die Fourier-Transformierten von $y_i(t)$ und $z_i(t)$ sind und $\alpha_{i,k}$ und $\bar{\alpha}_{i,k}$ die Operatoren darstellen $\exp(-it_{i,k}\omega)$ bzw. $\exp(it_{i,k}\omega)$.

4. Verfahren nach Anspruch 3, dadurch gekennzeichnet, daß man außerdem das Signal $d_i^*(t)$ erzeugt, Optimalabschätzung der Komponente der absteigenden Welle für die Gesamtheit der Signale $s_k(t)$, ausgehend von den Signalen $y_i(t)$ und $z_i(t)$ mittels inverser Fourier-Transformation des Signals $D_i^*$, abgeleitet entsprechend der Beziehung:

$$D_i^* = \frac{nZ_i - Y_i \cdot \sum\limits_{k=i}^{n+i-1} \bar{\alpha}_{i,k}^2}{n^2 - \sum\limits_{k=i}^{n+i-1} \alpha_{i,k}^2 \cdot \sum\limits_{k=i}^{n+i-1} \bar{\alpha}_{i,k}^2}$$

5. Verfahren nach Anspruch 2, dadurch gekennzeichnet, daß ein Näherungswert des Signals $u_i^*(t)$ berechnet wird gemäß der Beziehung:

$$u_i^*(t) = \frac{1}{n} y_i(t) - \frac{1}{n^2} \sum_{k=i}^{n+i-1} z_i(t-2t_{i,k})$$

14

6. Verfahren nach Anspruch 5, dadurch gekennzeichnet, daß man einen Näherungswert des Signals $d_i^*(t)$ berechnet, Optimalabschätzung der Komponente der absteigenden Welle für die Gesamtheit der Signale $s_k(t)$, ausgehend von den Signalen $y_i(t)$ und $z_i(t)$, gemäß der Beziehung:

$$d_i^*(t) = \frac{1}{n}\, z_i(t) - \frac{1}{n^2} \sum_{k=i}^{n+i-1} y_i(t + 2\,t_{i,k})$$

7. Verfahren nach einem der Ansprüche 1 bis 6, dadurch gekennzeichnet, daß die genannten unterschiedlichen Erfassungstiefen innerhalb eines festgelegten Bereiches derart festgelegt sind, daß die akustische Kopplung zwischen dem Detektor und den unterirdischen Formationen, welche diesen Detektor umgeben, optimiert wird.

8. Verfahren nach einem der Ansprüche 1 bis 7, dadurch gekennzeichnet, daß man aus den Erfassungssignalen M vor der Filterung die Erfassungssignale defizitärer Qualität eliminiert.

9. Verfahren nach einem der Ansprüche 1 oder 2, dadurch gekennzeichnet, daß die Signale $s_k(t - t_{i,k})$ und $s_k(t + t_{i,k})$ korrigiert werden unter jeweiliger Anwendung eines Konvolutionsoperators und eines konjugierten Operators dieses Konvolutionsoperators, der bestimmt wird ausgehend von den Werten der akustischen Impedanz der unterirdischen Formationen, durchteuft von dem Bohrloch, und repräsentativ ist für Effekte, die in Beziehung stehen mit Veränderungen der Werte der genannten akustischen Impedanz in jedem Abschnitt, enthalten zwischen den Niveaus $x_i$ und $x_k$.

10. Verfahren nach Anspruch 9, dadurch gekennzeichnet, daß das Signal $u_i(t)$ abgeleitet wird durch inverse Fourier-Transformation des Ausdrucks $U_i^*$ gemäß der Beziehung:

$$U_i^* = \frac{P_{i,n}\, Y_i' - Z_i' \cdot \displaystyle\sum_{k=i}^{n+i-1} \beta_{i,k}^2}{P_{i,n}^2 - \displaystyle\sum_{k=i}^{n+i-1} \beta_{i,k}^2 \cdot \sum_{k=i}^{n+i-1} \overline{\beta}_{i,k}^2}$$

worin $Y_i'$ und $Z_i'$ die Fourier-Transformationen von $y_i'(t)$ und $z_i'(t)$ sind, erhalten durch Addieren des Signals $s_i(t)$ und der korrigierten und vorverlegten bzw. zurückverlegten Signale $s_k(t)$ sind, $\beta_{i,k}$ und $\overline{\beta}_{i,k}$ jeweils die Produkte $\alpha_{i,k} \cdot A_{i,k}$ und $\overline{\alpha}_{i,k} \cdot \overline{A}_{i,k}$ und

$$P_{i,n} = \sum_{k=i}^{n+i-1} A_{i,k}\, \overline{A}_{i,k}$$

$A_{i,k}$ die Fourier-Transformante des genannten Operators ist und $A_{i,k}$ seine Konjugierte.

11. Verfahren nach Anspruch 10, dadurch gekennzeichnet, daß man zusätzlich das Signal $d_i^*(t)$ als Optimalabschätzung der Komponente der absteigenden Welle für die Gesamtheit der Signale $s_k(t)$ ausgehend von den Signalen $y_i'$ und $z_i'$ erzeugt durch inverse Fourier-Transformation des Signals $D_i^*$, abgeleitet entsprechend der Beziehung

$$D_i^* = \frac{P_{i,n}\, Z_i' - Y_i' \cdot \displaystyle\sum_{k=i}^{n+i-1} \overline{\beta}_{i,k}^2}{P_{i,n}^2 - \displaystyle\sum_{k=i}^{n+i-1} \beta_{i,k}^2 \cdot \sum_{k=i}^{n+i-1} \overline{\beta}_{i,k}^2} \qquad \text{(XXVII)}$$

12. Seismische Explorationsanordnung für die Durchführung des Verfahrens nach Anspruch 1 mit einem akustischen Wellendetektor und Mitteln zum Verlagern dieses Detektors in einem Bohrloch mit einer Quelle akustischer Wellen mit Mitteln zum Registrieren der von dem Detektor erzeugten Signale, welche Signale Komponenten der absteigenden Welle und Komponenten der wiederaufsteigenden Welle umfassen und mit Mitteln zum Filtern dieser Signale, um das Signal-Rausch-Verhältnis zu verbessern, dadurch gekennzeichnet, daß die Filtermittel umfassen:

—  einen Speicher (30), der die N zu bearbeitenden Signale enthält und gesteuert wird zum Liefern einer Serie von $n$ Signalen $s_k(t)$ entsprechend den aufeinanderfolgenden Niveaus $x_k$ mit $i \leq k \leq n + i - 1$,

—  einen Speicher (35), enthaltend die Laufzeiten $t_{i,k}$ der akustischen Wellen vom Niveau $x_i$ bis zu jedem Niveau $x_k$,

—  einen ersten Versetzungsschaltkreis (31) zum Vorverlegen der Signale $s_k(t)$ der Zeiten $t_{i,k}$ relativ zum Signal $s_i(t)$,

— einen ersten Summierer (32), der die Summe $z_i$ (t) des Signals $s_i$ (t) und der Signale $s_k$ (t), auf diese Weise vorversetzt, liefert,

— einen zweiten Verlagerungsschaltkreis (33) zum Verzögern der Signale $s_k$ (t) jeweils der Zeiten $t_{i,k}$ bezüglich des Signals $s_i$ (t),

— einen zweiten Summierer (34), der die Summe $y_i$ (t) des Signals $s_i$ (t) der auf diese Weise verzögerten Signale $s_k$ (t) liefert,

— Berechnungsmittel (36—39; 51—55) zum Bestimmen, ausgehend von den Signalen $y_i$ (t) und $z_i$ (t) eines Signals $u_i^*$ (t), definiert als eine Optimalabschätzung nach der Methode der kleinsten Quadrate und repräsentativ für die Gesamtkomponente der wiederaufsteigenden Welle für die Gesamtheit der Signale $s_k$ (t),

— mit den Berechnungsmitteln verbundene Registriermittel und

— Mittel zum Verändern des Index i zwischen den Werten 1 und $N-n+1$.

13. Anordnung nach Anspruch 12, dadurch gekennzeichnet, daß die Berechnungsmittel Anordnungen (36, 37) umfassen, verbunden mit den Summierern (32, 34) und Fourier-Transformanten $Y_i$ und $Z_i$ von $y_i$ (t) und $z_i$ (t) liefernd, wobei ein Rechner (38) die Größe $U_i^*$ entsprechend der Beziehung liefert:

$$U_i^* = \frac{nY_i - Z_i \cdot \sum\limits_{k=i}^{n+i-1} \alpha_{i,k}^2}{n^2 - \sum\limits_{k=i}^{n+i-1} \alpha_{i,k}^2 \cdot \sum\limits_{k=i}^{n+i-1} \overline{\alpha}_{i,k}^2}$$

worin $\alpha_{i,k}$ bzw. $\overline{\alpha}_{i,k}$ die Operatoren exp $(-it_{i,k}\omega)$ bzw. exp $(it_{i,k}\omega)$ sind, und eine Anordnung (39), die die inverse Fourier-Transformante liefert und das Signal $u_i^*$ (t) ausgehend von $U_i^*$ erzeugt.

14. Anordnung nach Anspruch 13, dadurch gekennzeichnet, daß der Rechner (38) gleichermaßen das Signal $D_i^*$ entsprechend der Beziehung:

$$D_i^* = \frac{nZ_i - Y_i \sum\limits_{k=i}^{n+i-1} \overline{\alpha}_{i,k}^2}{n^2 - \sum\limits_{k=i}^{n+i-1} \alpha_{i,k}^2 \cdot \sum\limits_{k=i}^{n+i-1} \overline{\alpha}_{i,k}^2}$$

liefert, welches Signal an die Anordnung (39) zum Liefern der inversen Fourier-Transformante angelegt wird, die ein Signal $d_i^*$ (t) erzeugt als Optimalabschätzung der Komponente der absteigenden Welle für die Gesamtheit der Spuren $s_k$ (t).

15. Anordnung nach Anspruch 12, dadurch gekennzeichnet, daß die Berechnungsmittel eine Verlagerungsvorrichtung (51) umfassen zum Liefern, ausgehend von dem Signal $s_i$ (t), von verlagerten Signalen $z_i$ $(t-2t_{i,k})$, einen Summierer (53) zum Liefern der Summe der Signale $z_i$ (t) und $z_i$ $(t-2t_{i,k})$, einen Schaltkreis (54) zum Dividieren dieser Summe durch $n^2$, einen Schaltkreis (55), welcher das Signal $y_i$ (t) durch n dividiert, und einen Subtraktor (56), verbunden mit den zwei Dividierschaltkreisen (54, 55) zum Liefern eines annähernden Signals $u_i^*$ (t).

16. Anordnung nach Anspruch 15, dadurch gekennzeichnet, daß die Berechnungsmittel weiterhin eine Versetzungsanordnung (61) umfassen zum Liefern, ausgehend vom Signal $y_i$ (t), von verlagerten Signalen $y_i$ $(t+2t_{i,k})$, einen Summierer (63) zum Liefern der Summe der Signale $y_i$ (t) und $y_i$ $(t+2t_{i,k})$, einen Schaltkreis (64) zum Dividieren dieser Summe durch $n^2$, einen Schaltkreis (65) zum Dividieren des Signals $z_i$ (t) durch n und einen Subtraktor (66), verbunden mit den beiden Dividierschaltkreisen (64, 65) zum Liefern eines Signals $d_i^*$ (t), das in annähernder Weise eine Optimalabschätzung der Komponente der absteigenden Welle für die Gesamtheit der Spuren $s_k$ (t) repräsentiert.

## Claims

1. Seismic exploration method in which one filters N detection signals $s_1$ (t), ... $s_N$ (t), the (t) symbol meaning it is a matter of function of time, from M detection signals with $M \geq N$, in a borehole, each of the said M signals being produced in response to an emission of acoustic waves from a source on the surface and each of said signals comprising a downgoing wave component and an upgoing wave component,

the filtering including the following operations:

a) In a first cycle with index $i = 1$,

— sampling from among the N signals to be processed a group of n signals $s_k$ (t) with $i \leq k \leq n+i-1$

16

detected at successive levels $x_k$;
- determining the propagation times $t_{i,k}$ of the acoustic waves between the level $x_i$ and each level $x_k$, being obvious that $t_{i,i} = 0$;
- shifting each signal $s_k(t)$ by advancing it by the time $t_{i,k}$ with respect to the signal $s_i(t)$ to obtain thus a signal $s_k(t + t_{i,k})$ in correspondence with each signal $s_k(t)$ so as to align each of said downgoing wave components;
- adding up the signals $s_k(t + t_{i,k})$ to obtain a signal $z_i(t)$ in which the downgoing wave component is accentuated;
- shifting each signal $s_k(t)$ by delaying it by the time $t_{i,k}$ with respect to the signal $s_i(t)$ to obtain thus a signal $s_k(t - t_{i,k})$ in correspondence with each signal $s_k(t)$ so as to align each of said upgoing wave components;
- adding up the signal $s_k(t - t_{i,k})$ to obtain a signal $y_i(t)$ in which the upgoing wave component is accentuated;

characterized in that said filtering includes furthermore the operations consisting in:

- generating a signal $u_i^*(t)$ defined as an optimum estimation according to least squares formulation and representative of the total component of the upgoing wave for all the signals $s_k(t)$, from the signals $y_i(t)$ and $z_i(t)$;
- recording this signal $u_i^*(t)$;
b) In the successive following cycles, until cycle $N - n + 1$, repeating the operations of the first cycle where index $i = 2, 3, \ldots, N - n + 1$ respectively.

2. Method according to claim 1, characterized by the fact that the signals $u_i^*(t)$ are obtained by minimizing the following expression according to least squares formulation:

$$\sum_{k=i}^{k=n+i-1} |\, s_k(t) - \mu_i^*(t + t_{i,k}) - d_i^*(t - t_{i,k})\,|^2$$

in which signal $d_i^*(t)$ represents an optimal estimation of the total component of the downgoing wave.

3. Method according to claim 2, characterized by the fact that the signal $u_i^*(t)$ is obtained by inverse Fourier transformation of the expression $U_i^*$ related to $y_i(t)$ and $z_i(t)$ by the relation:

$$U_i^* = \frac{nY_i - Z_i \cdot \displaystyle\sum_{k=i}^{n+i-1} \alpha_{i,k}^2}{n^2 - \displaystyle\sum_{k=i}^{n+i-1} \alpha_{i,k}^2 \cdot \displaystyle\sum_{k=i}^{n+i-1} \overline{\alpha}_{i,k}^2}$$

where $Y_i$ and $Z_i$ are the Fourier transforms of $y_i(t)$ and $z_i(t)$, and $\alpha_{i,k}$ and $\overline{\alpha}_{i,k}$ are respectively the operators $\exp(-it_{i,k}\omega)$ and $\exp(it_{i,k}\omega)$.

4. Method according to claim 3, characterized by the fact that one also generates the signal $d_i^*(t)$, optimum estimation of the downgoing wave component for all the signals $s_k(t)$, from signals $y_i(t)$ and $z_i(t)$ by reverse Fourier transformation of the signal $D_i^*$ obtained in accordance with the relationship:

$$D_i^* = \frac{nZ_i - Y_i \cdot \displaystyle\sum_{k=i}^{n+i-1} \overline{\alpha}_{i,k}^2}{n^2 - \displaystyle\sum_{k=i}^{n+i-1} \alpha_{i,k}^2 \cdot \displaystyle\sum_{k=i}^{n+i-1} \overline{\alpha}_{i,k}^2}$$

5. Method according to claim 2, characterized by the fact that an approximate value of the signal $u_i^*(t)$ is calculated by the relation:

$$u_i^*(t) = \frac{1}{n}\, y_i(t) - \frac{1}{n^2} \sum_{k=i}^{n+i-1} z_i(t - 2t_{i,k})$$

6. Method according to claim 5, characterized by the fact that one calculates an approximate value of the signal $d_i^*(t)$, optimum estimation of the downgoing wave component for all the signals $s_k(t)$, from signals $y_i(t)$ and $z_i(t)$ by the relation

$$d_i^*(t) = \frac{1}{n} \, z_i(t) - \frac{1}{n^2} \sum_{k=i}^{n+i-1} y_i \, (t + 2 \, t_{i,k})$$

7. Method according to any of claims 1 to 6, characterized by the fact that said different detection dephts are set within a given range so as to optimize the acoustic coupling between the detector and the underground formations surrounding said detector.

8. Method according to any of claims 1 to 7, characterized by the fact that, among the detection signals M, before filtering, the detection signals of deficient quality are eliminated.

9. Method according to claim 1 or 2, characterized by the fact that the signals $s_k \, (t - t_{i,k})$ and $s_k \, (t + t_{i,k})$ are corrected thanks to respectively a convolution operator and a conjugate operator of said convolution operator determined from the values of the acoustic impedance in the formation traversed by the well, and which is representative of the effects ascribable to acoustic impedance variations in each section defined between level $x_i$ and level $x_k$.

10. Method according to claim 9, characterized by the fact that the signal $u_i^*(t)$ is obtained by inverse Fourier transformation of the expression $U_i^*$ by the relation:

$$U_i^* = \frac{P_{i,n} Y_i' - Z_i' \cdot \displaystyle\sum_{k=i}^{n+i-1} \beta_{i,k}^2}{P_{i,n}^2 - \displaystyle\sum_{k=i}^{n+i-1} \beta_{i,k}^2 \cdot \displaystyle\sum_{k=i}^{n+i-1} \overline{\beta}_{i,k}^2}$$

where $Y_i'$ and $Z_i'$ are the Fourier transforms of $y_i'(t)$ and $z_i'(t)$ obtained in adding up signal $s_i(t)$ to the signals $s_k(t)$ corrected and respectively advanced and delayed, $\beta_{i,k}$ and $\overline{\beta}_{i,k}$ are respectively the products $\alpha_{i,k} \cdot A_{i,k}$ and $\overline{\alpha}_{i,k} \cdot \overline{A}_{i,k}$, and

$$P_{i,n} = \sum_{k=i}^{n+i-1} A_{i,k} \, \overline{A}_{i,k}$$

$A_{i,k}$ being the Fourier transform of said operator and $\overline{A}_{i,k}$ its conjugate.

11. Method according to claim 10, characterized by the fact that one also generates the signal $d_i^*(t)$, optimum estimation of the downgoing wave component for all the signals $s_k(t)$, from signals $y_i'$ and $z_i'$ by inverse Fourier transformation of the signal $D_i^*$ obtained in accordance with the relation:

$$D_i^* = \frac{P_{i,n} Z_i' - Y_i' \cdot \displaystyle\sum_{k=i}^{n+i-1} \overline{\beta}_{i,k}^2}{P_{i,n}^2 - \displaystyle\sum_{k=i}^{n+i-1} \beta_{i,k}^2 \cdot \displaystyle\sum_{k=i}^{n+i-1} \overline{\beta}_{i,k}^2}$$

12. Seismic exploration installation for the implementation of the method according to claim 1, comprising an acoustic wave detector and means for moving this detector in a well, an acoustic wave source, means for recording the signals produced by detector, said signals comprising downgoing wave components and upgoing wave components, and means for filtering these signals in order to improve the signal/noise ratio, characterized by the fact that the filtering means include:

- a memory (30) containing the N signals to be processed and controlled to furnish a series of n signals corresponding to successive levels with $i \leq k \leq n + i - 1$;
- a memory (35) containing the propagation times $t_{i,k}$ of the acoustic waves from the level $x_i$ to each level $x_k$;
- a first shift circuit (31) for advancing the signals $s_k(t)$ respectively by the time $t_{i,k}$ in relation to the signal $s_i(t)$;
- a first adder (32) furnishing the sum $z_i(t)$ of the signal $s_i(t)$ and of the signals $s_k(t)$ thus advanced;
- a second shift circuit (33) for delaying the signals $s_k(t)$ respectively by the time $t_{i,k}$ in relation to the signal $s_i(t)$;
- a second adder (34) furnishing the sum $y_i(t)$ of the signal $s_i(t)$ and of the signals $s_k(t)$ thus delayed;
- computation means (36—39; 51—55) for determining from the signals $y_i(t)$ and $z_i(t)$ a signal $u_i^*(t)$ defined as an optimum estimation of the total component of the upgoing wave for all the signals $s_k(t)$;
- recording means connected to the computation means; and
- means to vary index i from value 1 to value $N - n + 1$.

18

13. Installation according to claim 12, characterized by the fact that the computation means comprise devices (36, 37) connected to the adders (32, 34) and furnishing the Fourier transforms $Y_i$ and $Z_i$ of $y_i(t)$ and $z_i(t)$, a computer (38) furnishing the parameter $U_i^*$ by the relationship

$$U_i^* = \frac{nY_i - Z_i \cdot \sum\limits_{k=i}^{n+i-1} \alpha_{i,k}^2}{n^2 - \sum\limits_{k=i}^{n+i-1} \alpha_{i,k}^2 \cdot \sum\limits_{k=i}^{n+i-1} \bar{\alpha}_{i,k}^2}$$

where $\alpha_{i,k}$ and $\bar{\alpha}_{i,k}$ are respectively the operators $\exp(-it_{i,k}\omega)$ and $\exp(it_{i,k}\omega)$, and a device (39) furnishing the inverse Fourier transform and delivering the signal $u_i^*(t)$ from $U_i^*$.

14. Installation according to claim 13, characterized by the fact that the computer (38) also generates the signal $D_i^*$ according to the relation

$$D_i^* = \frac{nZ_i - Y_i \sum\limits_{k=i}^{n+i-1} \alpha_k^2}{n^2 - \sum\limits_{k=i}^{n+i-1} \alpha_{i,k}^2 \cdot \sum\limits_{k=i}^{n+i-1} \bar{\alpha}_{i,k}^2}$$

this signal being applied to the device (39) furnishing the inverse Fourier transform which delivers a signal $d_i^*(t)$, the optimum estimation of the downgoing wave component for all the signals $s_k(t)$.

15. Installation according to claim 12, characterized by the fact that the computation means comprise a shift device (51) furnishing shifted signals $z_i(t - 2t_{i,k})$ from the signal $z_i(t)$, an adder (53) furnishing the sum of the signals $z_i(t)$ and $z_i(t - 2t_{i,k})$, a circuit (54) dividing this sum by $n^2$, a circuit (55) dividing by $n$ the signal $y_i(t)$ and a subtractor (56) related to the two dividing circuits (54, 55) and furnishing an approximate signal $u_i^*(t)$.

16. Installation according to claim 15, characterized by the fact that the computation means further comprise a shift device (61) furnishing shifted $y_i(t + 2t_{i,k})$ from the signal $y_i(t)$, an adder (63) furnishing the sum of the signals $y_i(t)$ and $y_i(t + 2t_{i,k})$, a circuit (64) dividing this sum by $n^2$, a circuit (65) dividing by $n$ signal $z_i(t)$ and a subtractor (66) connected to the two dividing circuits (64, 65) and furnishing a signal $d_i^*(t)$ representing approximately an optimum estimation of the downgoing component for all the tracks $s_k(t)$.

19

FIG.1

FIG.2

**FIG.3**

TEMPS

PROFONDEUR

**FIG.4**

0 053 525

FIG.5

TEMPS

PROFONDEUR

FIG.6

**FIG.7**

FIG. 8

FIG. 12

FIG. 9

FIG.10

0 053 525

37

FIG.11